# EUROPEAN PATENT SPECIFICATION

(11) **EP 1 571 825 B1**
(45) Date of publication and mention of the grant of the patent: **26.09.2007**
(21) Application number: 05004384.3
(22) Date of filing: 28.02.2005
(51) Int. Cl.: H04N 1/21, H04N 1/00

(54) **Generation, starting from a time sequence of source still image data, of a still image file including additional information for subsequent processing**
Erzeugung einer Bilddatei mit zusätzlichen Informationen zur Weiterverarbeitung aus einer Zeitfolge von Quellbilddaten
Génération, à partir d'une séquence temporelle d'images source, d'un fichier d'image, incluant des informations supplémentaires en vue d'un traitement ultérieur

(30) Priority: 02.03.2004 JP 2004057163; 02.03.2004 JP 2004057158
(43) Date of publication of application: 07.09.2005
(73) Proprietor: Seiko Epson Corporation, Shinjuku-ku, Tokyo 163-0811 (JP)
(72) Inventor: Aiso, Seiji, Suwa-shi, Nagano-ken 392-8502 (JP); Kuwata, Naoki, Suwa-shi, Nagano-ken 392-8502 (JP)
(74) Representative: Winter, Brandl, Fürniss, Hübner Röss, Kaiser, Polte Partnerschaft Patent- und Rechtsanwaltskanzlei

(56) References cited:
- EP-A- 0 804 040
- WO-A-03/001788
- US-A1- 2002 061 142
- US-B1- 6 650 704
- REDHAWK VISION: "Video Pics 1.1 Mac User Guide"[Online] 2001, XP002326737 COSTA MESA, CALIFORNIA, USA Retrieved from the Internet: URL:www.redhawkvision.com/User_Guide_Mac.p df> [retrieved on 2005-04-29]

## Description

### BACKGROUND OF THE INVENTION

### Field of the Invention

The present invention relates to image processing technology that generates still image data from a plurality of still image data.

### Description of the Related Art

In recent years, technology that generates still image data from moving image data recorded using a digital video camera or other moving image capturing device has become popular. However, for the process of generating still image data from moving image data, generally, there was the problem of losing dynamic information such as the subject movement vector or camera work, for example. Meanwhile, still image data of higher resolution generated from still image data that is continuous in time sequence has the quality of having the image deteriorate excessively when specific image quality adjustment is performed. In this way, since still image data that is generated from still image data continuously in time sequence such as moving image data has unique properties, special consideration is desirable for its image processing as well.

However, in the past, after generation of still image data, information that shows this kind of unique property is entrusted to control by the user, so the demand for special consideration for image processing became a burden on the user.

Document EP-A-0 804 040 describes an apparatus and method for generating digital still image files from digital moving images, wherein in order to capture digital moving image information supplied from a digital video tape recorder and to generate high quality still image data files, a programmable controller executes program instructions to determine whether an image capturing operation has been activated and to determine whether the extracted frame is valid/appropriate. If so, a header is appended, based on various video transmission standards such as NTSC or PAL, to the extracted frame data, thereby generating an image file. The frame data following this header is then recorded on a recording medium, such as a disk, for subsequent signal processing by the programmable controller.

### Summary of the Invention

The present invention was created to solve the problems described above of the prior art, and its purpose is to provide a technology that, for an image file generating method that generates image files, includes as attribute information in an image file, information which can be used for image processing on still image data that is generated from a plurality of source still image data that are continuous in time sequence.
The object is solved by the features of the independent claims. The dependent claims are directed to preferred embodiments of the invention.

With the method of the present invention, a data file is generated that includes as attribute information, information that can be used for image processing for still image data according to the generation of still image data from a plurality of source still image data that are continuous in time sequence, so realization of image processing that considers the unique properties of still image data generated in this way is possible without excessively increasing the burden on the user.

Note that a still image data file does not necessarily have to be a single data file, and can also be constructed as individual files associated with the present invention.

According to one embodiment of the present invention, attribute information generated using information other than the information contained in the still image data of the information contained in the moving image data is stored in the generated still image data file, so it is possible to obtain at least part of the kinds of advantages below.

For example, (1) even if moving image data is lost, it is possible to handle still images as part of the moving image. (2) For this kind of still image data file that has attribute information, it is possible to easily perform data control as part of a moving image. (3) There are cases when attribute information used for generating still image data from moving image data can be used again also for generating other still image data, so this makes it possible to increase the processing speed.

The aforementioned attribute information also contains information that characterizes a movement area which is the area for which movement is detected of the image areas shown by the aforementioned still image data. By doing this, it is possible to realize automatic trimming processing that focuses on the subject, for example. This is because there are many cases when the moving area is the subject.

It is also possible to have the aforementioned attribute information include movement information that shows the translational movement status in the aforementioned image area of the aforementioned movement area. By doing this, it is possible to realize trimming processing for which optimal placement is done automatically according to the movement status of the subject, for example.

It is also possible to have the aforementioned attribute information contain object information that shows the properties of the image within the aforementioned movement area. By doing this, it is possible for the user to easily acquire information that is useful when doing searches or making a database of still image data based on attribute information, etc.

With the image processing device of the present invention, it is possible to extract the subject automatically from still image data, so it is possible to lighten the burden on the user of processing an image, for example, when the focus is a subject synthesized to another image of the subject.

It is also possible to have the aforementioned attribute information contain movement information that shows the transitional movement status that includes the movement direction for the aforementioned image area of the movement area, and for the image processing device to be made to extract images of an area to which a specified area is added on the side of the aforementioned movement direction of the aforementioned movement area according to the aforementioned movement information.

By doing this, it is possible to automatically extract an image for which the moving subject has desirable placement. This is because generally, when a subject is moving, providing an empty area in the movement direction is desirable in terms of composition.

It is also possible to extract images of areas for which areas that are larger than the opposite side in the aforementioned movement direction at the side of the aforementioned movement direction of the aforementioned movement area are added to the aforementioned movement area according to the aforementioned movement information.

It is also possible to determine the shape of the image shown by the still image data to be generated by the aforementioned image process, and at the same time to have the aforementioned movement areas placed so that the surplus areas that occur within the image area that has the aforementioned determined shape are mostly distributed according to the aforementioned movement direction.

When the aforementioned shape is a square that has a specified aspect ratio, it is also possible to have the aforementioned image processing device have surplus areas that are generated when the aforementioned movement areas are placed within an image area that has the aforementioned specified aspect ratio placed so that more of them are distributed on either the top, bottom, or left or right side which is closest to the aforementioned movement direction.

Note that the present invention can be realized in a variety of formats, such as an image generating method and device, an image processing method and device, an image conversion method and device, an image output method and device, a computer program that realizes the functions of these methods or devices, a recording medium on which this computer program is recorded, or data signals realized within carrier waves that include this computer program.

### BRIEF DESCRIPTION OF THE DRAWINGS

Figure 1 is an explanatory diagram that shows an image processing system 100 as a embodiment of the present invention.

Figure 2 is an explanatory diagram that shows an operating display screen 200 for an image file generating process displayed on a display 18a.

Figure 3 is a flow chart that shows the contents of a still image data generating process for a first embodiment of the present invention.

Figure 4 is an explanatory diagram that shows an example of the structure of the moving image data used with the first embodiment of the present invention.

Figure 5 is a flow chart that shows the contents of a frame image extraction process for the first embodiment of the present invention.

Figure 6 is a flow chart that shows the contents of an evaluation value calculation process for the first embodiment of the present invention.

Figure 7(a), 7(b), and 7(c) are explanatory diagrams that show the status of a blocking process for the first embodiment of the present invention.

Figure 8(a), 8(b), and 8(c) are explanatory diagrams that show the results of a frame comparison process for the first embodiment of the present invention.

Figure 9 is an explanatory diagram that shows a coefficient chart used for the first embodiment of the present invention.

Figure 10 is an explanatory diagram that shows an example of the attribute information for this embodiment.

Figure 11 is an explanatory diagram that shows the structure of an image data file GF for this embodiment.

Figure 12 is a flow chart that shows the contents of a template image synthesis process for the first embodiment of the present invention.

Figure 13 is an explanatory diagram that shows an operating display screen 200a for the template image synthesis process displayed on the display 18a.

Figure 14 is a flow chart that shows the contents of an image insertion process for the first embodiment of the present invention.

Figure 15 is a flow chart that shows the contents of the optimal composition determination process for the first embodiment of the present invention.

Figure 16(a), 16(b), 16(c), and 16(d) are explanatory diagrams that show the status of determination of the optimal composition for the first embodiment of the present invention.

Figure 17(a) and 17(b) are explanatory diagrams that show the status of extraction of an image for a variation example of the first embodiment.

Figure 18 is an explanatory diagram that schematically shows the structure of the image generating and processing device according to an example.

Figure 19 is an explanatory diagram that shows a summary of generation of a high definition image file by an image generating and processing device and of image quality adjustment of a high definition image for the example.

Figure 20 is a flow chart that shows the flow of generation of a high definition image file by the image generating and processing device of the example.

Figure 21 is an explanatory diagram that schematically shows an example of the internal structure of a high definition image file.

Figure 22 is a flow chart that shows the flow of image adjustment of high definition images by the image generating and processing device of the example.

Figure 23(a) and 23(b) are explanatory diagrams that show an example of the user interface of an image generating and processing device when performing image quality adjustment of a high definition image.

Figure 24 is a flow chart that shows the flow of image synthesis by the image synthesis unit for the example.

Figure 25 is an explanatory diagram that shows position skew between the reference frame image and the target frame image for the example.

Figure 26 is an explanatory diagram that shows correction of the position skew between the reference frame image and the target frame image for the example .

Figure 27 is an explanatory diagram that shows an expanded view of the status of placement with correction of the skew between the reference frame image and the target frame image for the example.

Figure 28 is an explanatory diagram that shows the interpolation process using the bilinear method for the example.

Figure 29(a), 29(b), 29(c), and 29(d) are explanatory diagrams that conceptually show the relationship between the size of the threshold value R and the image quality of the high definition image Gp for the example.

### DESCRIPTION OF THE PREFERRED EMBODIMENT

Next, we will explain a preferred embodiment of the present invention and an example in the following sequence.
A-1. Structure of the Image Processing System for the First Embodiment of the Present Invention:
A-2. Still Image Data File Generating Process for the First Embodiment of the Present Invention:
A-3. Template Image Synthesis Process for the First Embodiment of the Present Invention:
A-4. Variation Examples of the First Embodiment:
B-1. Structure of the Image Generation and Processing Device for an Example:
B-2. Summary of the Process of an Example:
B-3. Generation of High Definition Image Files for the Example:
B-4. Image Quality Adjustment of High Definition Images for the Example:
B-5. Image Synthesis for the Example:
B-6. Variation Examples of the Example:
C. Variation Example:

A-1. Structure of the Image Processing System for the First Embodiment of the Present Invention:

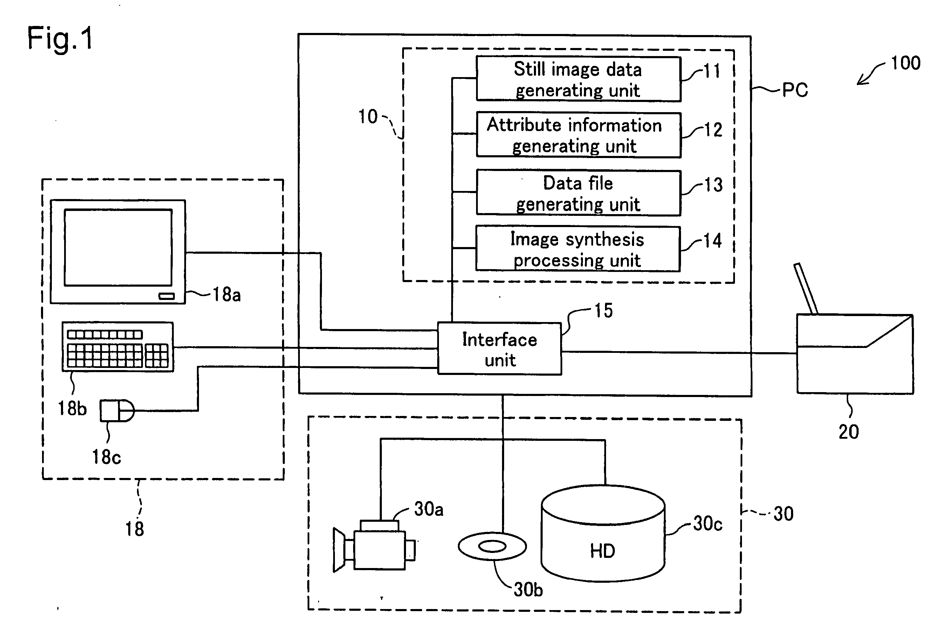

Figure 1 is an explanatory diagram that shows the image processing system 100 as a embodiment of the present invention. The image processing system 100 consists of a moving image database unit 30 that supplies moving image data, a user interface unit 18 that does specific image processing of a plurality of still image data acquired from the moving image data, a personal computer PC as an image processing device that performs image processing on the plurality of still image data acquired from the moving image database unit 30, and a color printer 20 as an output device that outputs processed still image data.

The personal computer PC consists of an image processing application program 10 which executes extraction of still image data from the moving image data as well as other image processing, and an interface unit 15 that acts as an interface between external devices such as the moving image database unit 30, the user interface unit 18, and the color printer 20.

The image processing application program 10 consists of a still image data generating unit 11 that generates still image data from moving image data, an attribute information generating unit 12 that generates attribute information when each still image data is generated, a data file generating unit 13 that generates a still image data file from the generated still image data and its attribute information, and an image synthesis processing unit 14 that synthesizes still image data files and template images prepared in advance.

The moving image database unit 30 has a digital video camera 30a, a DVD 30b, and a hard disk 30c as a source of supplying moving image data. With this embodiment, the moving image data is non-interlace format frame image data.

The user interface unit 18 is a user interface for the user to specify frame image data acquired from moving image data. The user interface unit 18 consists of a display 18a that displays moving images supplied from the moving image database unit 30, still images being generated, and an operation display screen to be described later, and a keyboard 18b and a mouse 18c that receive input from the user.

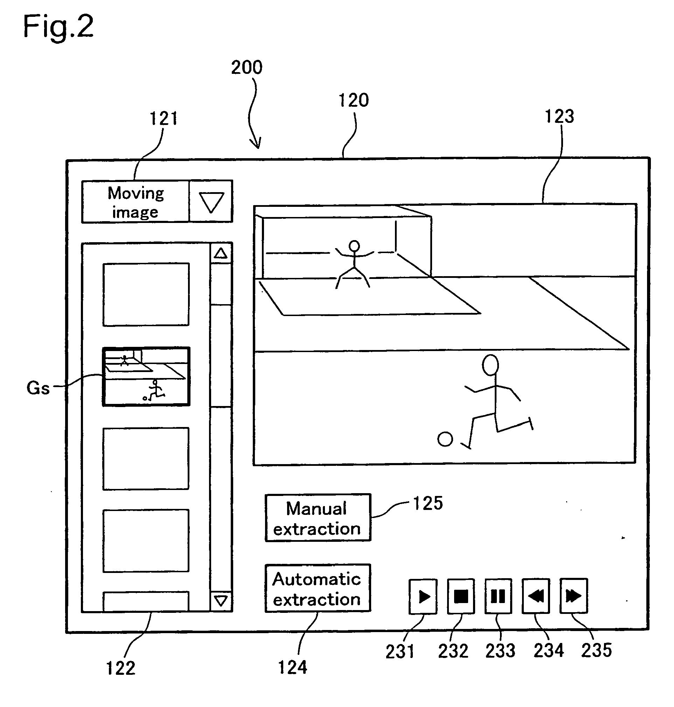

Figure 2 is an explanatory diagram that shows the operation display screen 200 for the image file generating process displayed on the display 18a. The operation display screen 200 includes a source image data type selection switch 121 that selects the source image data type which will be subject to processing, a source image data selection window 122 for selecting one from among a plurality of selected source image data, an image display area 123 that displays images shown by the source image data that is subject to processing, and operating buttons for still image data generating processing. Note that in the example in figure 2, a state is shown in which a moving image data Gs is selected in the source image data selection window 122.

The operating buttons for still image data generating processing include various types of buttons for controlling moving images displayed on the image display area 123. The various types of buttons for controlling moving images include a play button 231, a stop button 232, a pause button 233, a rewind button 34, and a fast forward button 235.

Further included in the operating buttons for still image data generating processing are a manual extraction button 125 for generating still image data from moving image data, and an automatic extraction button 124. The manual extraction button 125 is a button for the user to generate a still image while controlling moving images. Meanwhile, the automatic extraction button 124 is a button for automatically generating still image data from moving image data.

With the system structure explained above, when the automatic extraction button 124 is pressed, as shown below, a still image data file is generated that includes dynamic information contained in the moving image data as attribute information. Note that with this embodiment, "dynamic information" means information that shows the movement of a subject.

A-2. Still Image Data File Generating Process for the First Embodiment of the Present Invention:

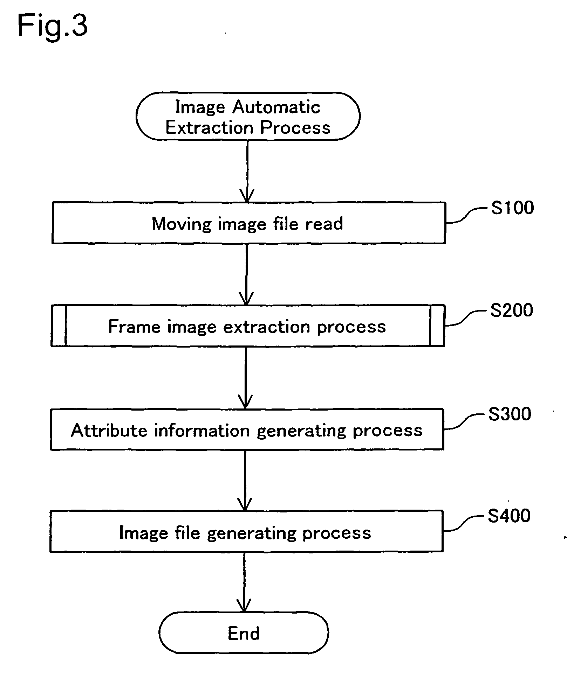

Figure 3 is a flow chart that shows the contents of the still image data generating process for the first embodiment of the present invention. At step S100, the image processing application program 10 (figure 1) receives supply of moving image data from the moving image database unit 30. The supplied moving image data is buffered in memory (not illustrated), and also displayed on the image display area 123 (figure 2).

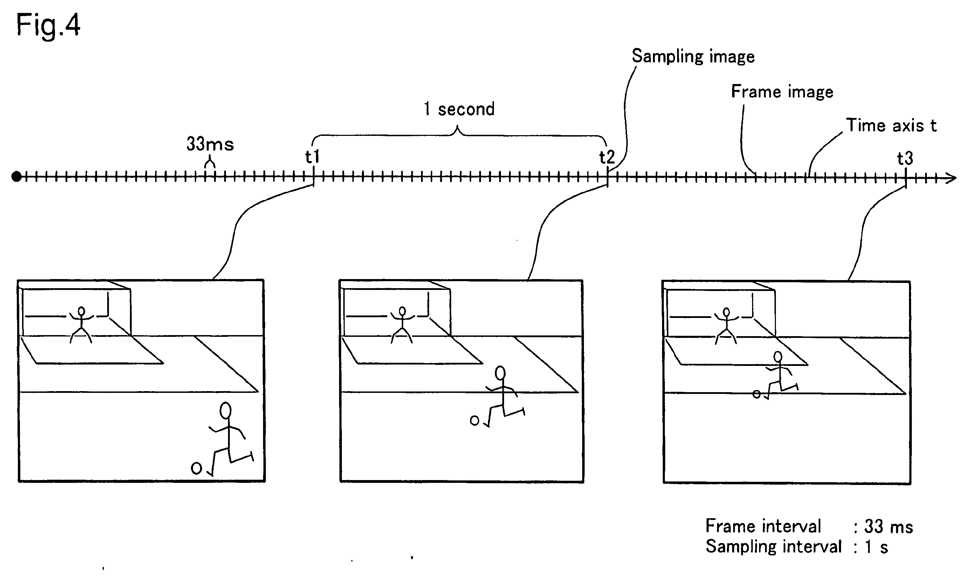

Figure 4 is an explanatory diagram that shows an example of the structure of the moving image data used with the first embodiment of the present invention. The moving image data is a grouping of frame image data continued in time sequence with 1 frame time as 33 ms, and a frame number is allocated in time sequence to each frame image data. With the example in figure 4, the moving image data shows a state where a soccer player is dribbling toward a goal.

With step S200, the still image data generating unit 11 executes the frame image extraction process. With this embodiment, the frame image extraction process is a process of selecting specific frame image data from moving image data which is a group of frame image data.

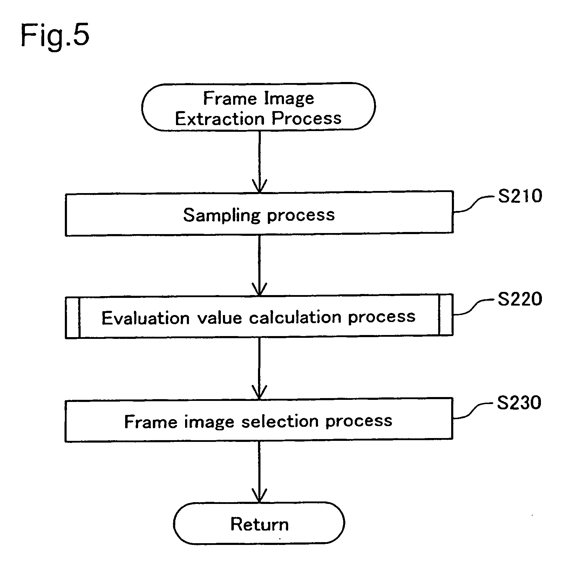

Figure 5 is a flow chart that shows the contents of a frame image extraction process for this embodiment. With step S210, the still image data generating unit 11 performs sampling processing. The sampling process is a process of extracting frame image data from moving image data. This extraction is performed by selecting frame image data at one second intervals, for example. With this specification, frame image data extracted in this way is called "sampling image data."

At step S220, the still image data generating unit 11 performs evaluation value calculation processing. The evaluation value calculation process is a process of calculating an evaluation value of each frame image. The details of this process will be described later.

At step S230, the still image data generating unit 11 performs the frame image selection process. The frame image selection process can be performed by selecting from the sampling image data frame image data for which the calculated evaluation value is larger than a specified preset threshold value.

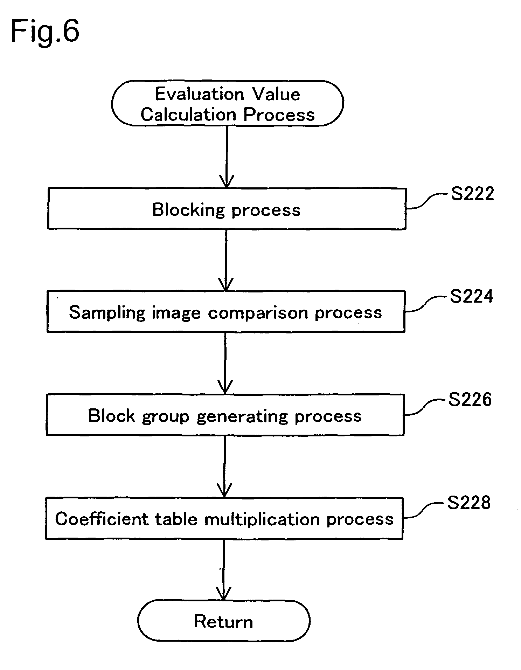

Figure 6 is a flow chart that shows the contents of the evaluation value calculating process for this embodiment. At step S222, the still image data generating unit 11 executes blocking processing. The blocking process is a process of dividing the selected frame image data area for each specified block.

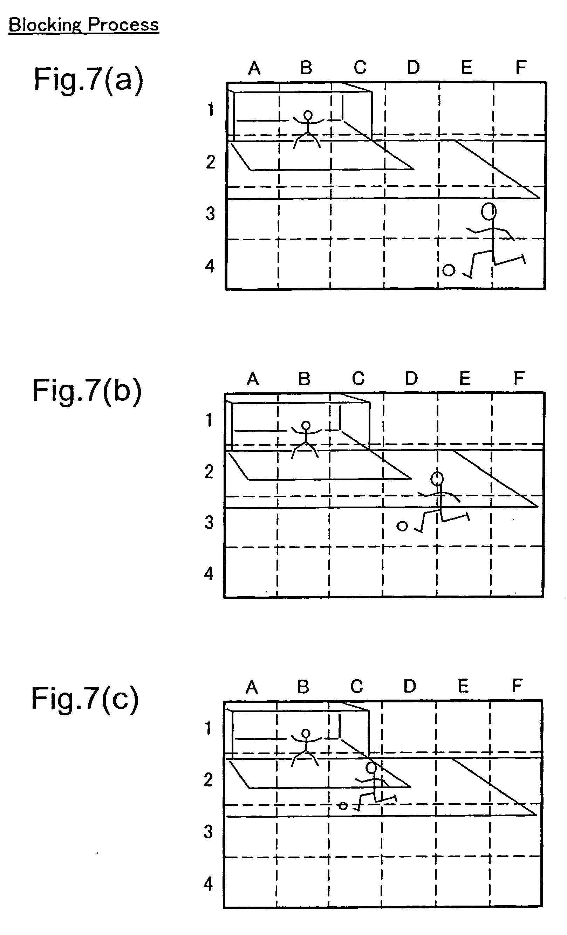

Figure 7(a), 7(b), and 7(c) are explanatory diagrams that show the status of the blocking process for this embodiment. Figures 7 (a), 7 (b), and 7 (c) show the status of three frame image data shown respectively in figures 4 (a), 4 (b), and 4 (c) having undergone the blocking process. Each frame image data is divided into three rows in the vertical direction and six rows in the horizontal direction.

At step S224, the still image data generating unit 11 executes the sampling image comparison process. The sampling image comparison process is a process of comparing continuous sampling images for each block. For the comparison method, it is possible to detect whether or not here is block movement using the gradient method, for example. Note that with this embodiment, as "movement," not only translational movement, but also rotational movement and change in size of the characteristics part are detected.

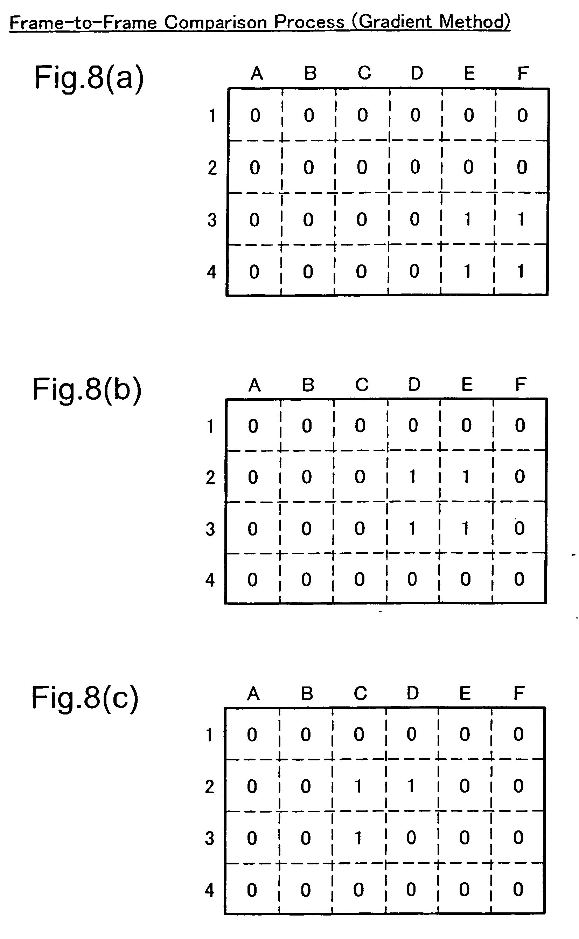

Figure 8(a), 8(b), and 8(c) are explanatory diagrams that show the results of the frame-to-frame comparison process for this embodiment. Figures 8 (a), 8 (b), and 8 (c) show the results of processing the frame image data shown respectively in figures 7 (a), 7 (b), and 7 (c). The processing results are shown as "1" for block values of blocks for which "movement" is detected (movement blocks), and as "0" for block values of blocks for which "movement" was not detected (still blocks).

In specific terms, processing like the following is performed. For example, for the frame image shown in figure 7 (a), four blocks are determined as movement blocks, column E row 3, column E row 4, column F line 3, and column F line 4. This is because the soccer player moves within the same block. As a result, regarding these four blocks, the block value is determined to be "1," and for other blocks, the block value is determined to be "0."

With the same process performed, for the frame image shown in figure 7 (b), only the block value of the four blocks of column D row 2, column D row 3, column E row 2, and column E row 3 are determined as "1," and similarly, for the frame image shown in figure 7 (c), only the block value of the three blocks of column C row 2, column C row 3, and column D row 2 are determined as "1."

At step S226, the still image data generating unit 11 executes block group generating processing. The block group generating process is a process that groups together a collection of continuous blocks for which the block value is "1" into a block group. This is because since this kind of block group is often the main subject, if processing is performed focused on the block group, it is possible to accurately estimate the subject status. Note that with this embodiment, the block group correlates to the "movement area" in the claims.

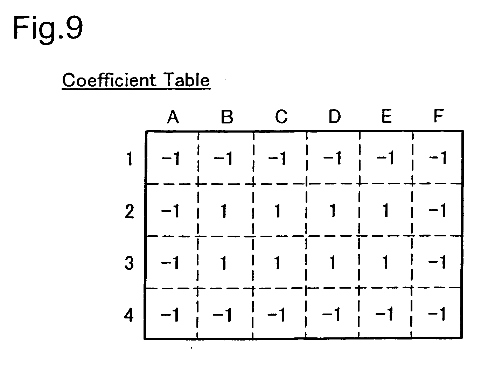

At step S228, the still image data generating unit 11 performs coefficient table multiplication processing. The coefficient table multiplication process is a process of calculating the total of the multiplied values of the coefficient table shown in figure 9 and the block values for each block group. For example, for the block group contained in the frame image data of figure 7 (a), the coefficient of the block values of the four blocks of column E row 3, column E row 4, column F row 3, and column F row 4 and of the blocks correlating to the coefficient table are respectively multiplied. Note that for other blocks, the block value is "0," so these can be ignored.

This coefficient table (figure 9) is constructed so that when the subject is in the center part of the image area, the result will be a high evaluation value. Because of this, the coefficients of the peripheral part are negative values, and at the same time, the coefficients of the center part are positive values. Note that the coefficient table of this embodiment has been abbreviated to make the explanation easier to understand.

In specific terms, the following calculation is performed. For column E row 3, the block value "1" and the corresponding coefficient "1" in the coefficient table are multiplied, and the multiplied value "1" is calculated. With the same process performed, for column E row 4, column F row 3, and column F row 4, a multiplied value of "-1" is calculated. The sum of these values is "-3." Similarly, for each block group contained in the frame images of figures 7 (b) and 7 (c), the respective results are "4" and "3."

In this way, the evaluation values of the frame images shown in figures 7 (a), 7 (b), and 7 (c) are respectively calculated as "-3," "4," and "3."

At step S230 (figure 5), the still image data generating unit 11 executes the sampling image selection process. The sampling image selection process is a process that selects frame image data that contains block groups based on the calculated evaluation values. For example, if the selection criterion is that there is included a block group for which the evaluation value is 4 or greater, then only the frame image shown in figure 7 (b) will be selected.

With step S300(figure 3), the attribute information generating unit 12 generates attribute information. Attribute information is dynamic attribute information which has moving image data in which is contained still image data. With this embodiment, the block group movement vector, in other words, the movement direction, and its size, are attribute information. This attribute information is generated for each still image data.

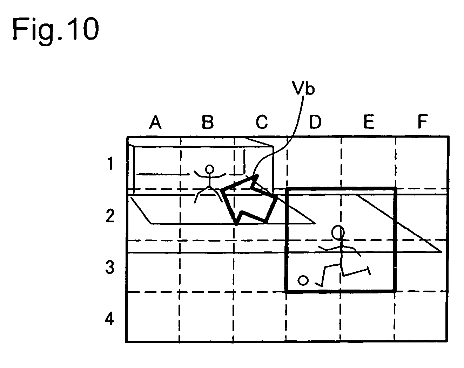

Figure 10 is an explanatory diagram that shows an example of attribute information for this embodiment. With the example in figure 10, the movement vector Vb facing from lower right to upper left correlates to the attribute information. The movement vector Vb may be generated as a combination of two numerical values, for example.

At step S400, the data file generating unit 13 executes the image file generating process. The image file generating process is a process with which a still image data file is generated using the selected frame image data and the generated attribute information.

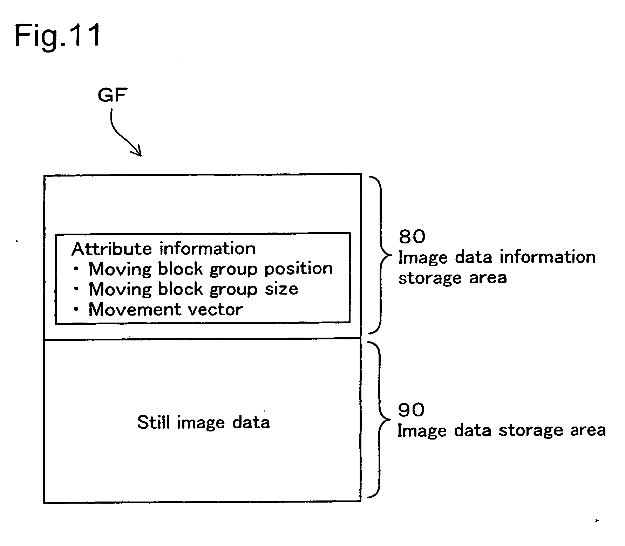

Figure 11 is an explanatory diagram that shows the structure of an image data file GF for this embodiment. The image data file GF is formed from an image data storage area 9000 and an image data information storage area 80. Stored in the image data storage area 9000 and the image data information storage area 80 are the frame image data and its attribute information, respectively.

With the example in figure 11, stored in the image data information storage area 80 as attribute information are the size of the block group (movement area) and the movement vector of this block group. The block group size may be shown as the number of vertical and horizontal pixels, for example.

The image data file GF may also have a file structure according to the digital still camera image file format standard (Exif). This standard was determined by the Japanese Electronics and Information Technology Association (JEITA). In this case, the attribute information may be stored in "Maker Note," for example. Also, instead of storing in the image data information storage area 80, it is also possible to store within still image data as a digital watermark.

The attribute information contained in a still image data file generated in this way can be effectively used for the template image synthesis process explained below, for example.

A-3. Template Image Synthesis Process for the First Embodiment of the Present Invention:

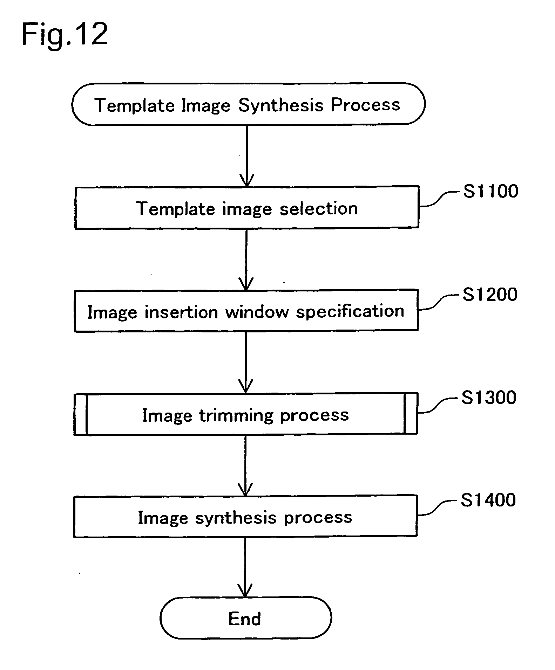

Figure 12 is a flow chart that shows the contents of a template image synthesis process of the first embodiment of the present invention. With this embodiment, the template image synthesis process is a process that synthesizes an area of part of the still image data extracted for a template image prepared in advance.

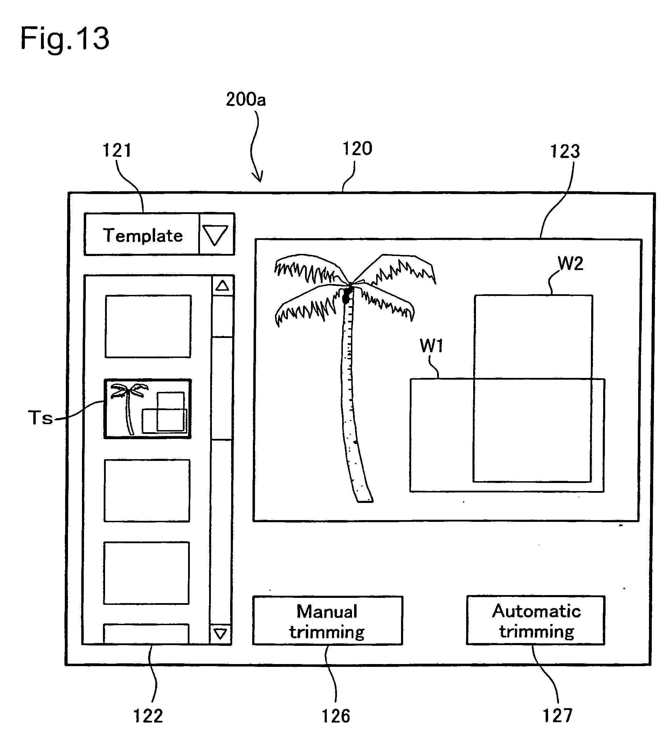

Figure 13 is an explanatory diagram that shows the operating display screen 200a for the template image synthesis process displayed in the display 18a. Similar to the previously described operating display screen 200, the operating display screen 200a includes a source image data type selection switch 121 that selects the type of source image data that is subject to processing, a source image data selection window 122 for selecting one from among the selected types of source image data, and an image display area 123 that displays images shown by the source image data which are subject to processing. For the operating buttons for doing still image data generating processing, instead of the various types of buttons for controlling moving images displayed in the image display area 123, included are a manual trim button 126 and an automatic trim button 127.

At step S1100, the user selects a template image. A template image means an image synthesized to implement ornamentation on photographic images, and correlates to the frame of a silver salt photograph. For selection of a template image, a user selects a "template" using the source image data type selection switch 121, and at the same time, it is possible to perform this by clicking a desired image using the source image data selection window 122.

A template image selected in this way has two image insertion windows W1 and W2 for inserting still images. The information of the size and aspect ratio of the two image insertion windows W1 and W2 are stored as attribute information of each template image for each template image.

At step S1200, the user specifies an image insertion window. With the example in figure 13, specification of the image insertion window may be performed by [selecting] either of the two image insertion windows W1 or W2 using the mouse 18c. When an image insertion window is specified, the information of the size and aspect ratio of the specified image insertion window is inserted in the image synthesis processing unit 14 (figure 1).

At step S1300, the user performs image insertion processing. The image insertion process is a process of inserting and synthesizing part of the still image data extracted within the window specified by the template image.

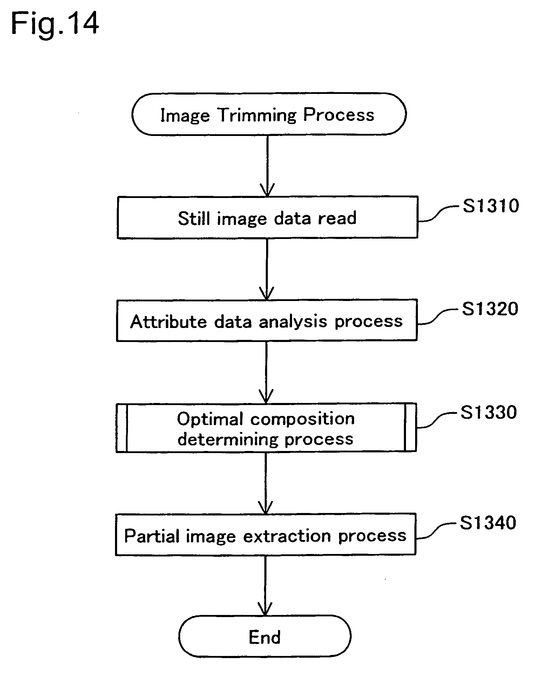

Figure 14 is a flow chart that shows the contents of the image insertion process for the first embodiment of the present invention. At step S1310, the user selects a still image data that is subject to insertion. The selection of the still image data may be performed by the user selecting a "still image" using the source image data type selection switch 121, and at the same time clicking a desired still image using the source image data selection window 122.

At step S1320, the image synthesis processing unit 14 executes the attribute data reading process. With the attribute data reading process, the attribute data of the still image data and the attribute data of the insertion window specified by the template image are read. When both image data attribute data are read, the process advances to the optimal composition determining process of step S1330. By doing this, the image synthesis processing unit 14 is able to determine the shape of the still image to be inserted based on the attribute data of the insertion window.

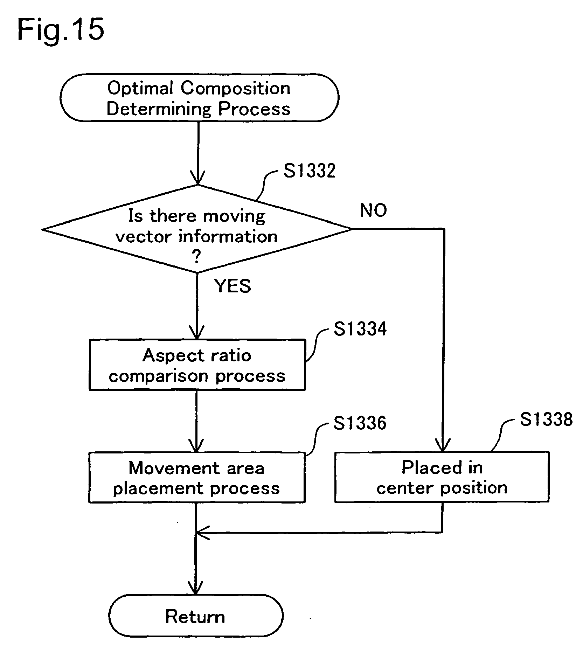

Figure 15 is a flow chart that shows the contents of the optimal composition determining process for the first embodiment of the present invention. The optimal composition determining process is a process for suitably placing the area of part of the still image data (hereafter called the insertion area) in the specified insertion window. With this embodiment, suitable placement means placement that would greatly open the space in the movement direction, taking into consideration the movement vector of the insertion area of the still image data.

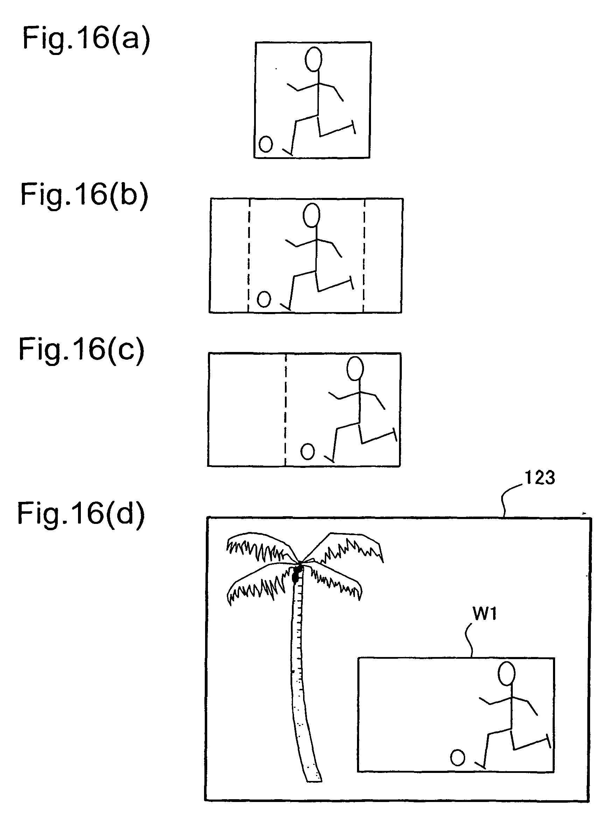

Figure 16 is an explanatory diagram that shows the status of the optimal composition being determined for the first embodiment of the present invention. Figure 16 (a) shows the insertion area. Figure 16 (b) shows the status of placement of the insertion area in the center of the insertion window. Figure 16 (c) shows the status of the placement of the insertion area in the right side of the insertion window with the optimal placement process. Note that with figures 16 (b) and 16 (c), the insertion area (figure 16 (a)) is shown by a dotted line.

At step S1332, the image synthesis processing unit 14 determines whether or not information that shows the movement vector is included in the attribute data of the still image data movement vector. When movement vector information is not included, the process advances to step S1338, and as shown in figure 16 (b), the insertion area is placed in the center of the insertion window. Meanwhile, when movement vector information is included, the process advances to step S1334.

At step S1334, the image synthesis processing unit 14 executes the aspect ratio comparison process. The aspect ratio comparison process is a process with which the aspect ratios (vertical and horizontal ratio) of the insertion window and the insertion area are compared, and it is determined whether or not an empty space is formed in either the vertical direction or horizontal direction within the insertion window. For example, with the example in figure 16, we can see that there is an empty space in the horizontal direction within the insertion window. Note that in the direction in which an empty area is not generated, by adjusting the size of the insertion image, the size of the insertion window W1 and the insertion area are matched.

At step S1336, the image synthesis processing unit 14 executes the insertion area placement process. The insertion area placement process is a process with which the insertion image is placed in the optimal position within the insertion window based on the movement vector. In specific terms, the insertion image is placed so that an open space is created at the front side of the movement direction within the insertion window. Generally, this is because when the subject is moved, it is desirable in terms of composition to provide an empty space in the movement direction.

At step S1400, the image synthesis processing unit 14 matches the sizes of the insertion image and the insertion window and does synthesis to generate a synthesized image like that shown in figure 16 (c). Note that the optimal placement described above may be made to be executed only when the movement vector is a specified size or greater, and when it is less than a specified size, it would be placed in the center position.

In this way, with this embodiment, it is possible to execute the synthesis process for which the optimal placement was done automatically based on information generated when still image data is generated from moving image data, so it is possible to reduce the burden on the user for the process of synthesizing to a template image of a still image extracted from a moving image.

A-4. Variation Examples of the First Embodiment:
With the first embodiment described above, the attribute information is the movement vector of the block group (movement area), but it is also possible to have this be information that shows the characteristics of images within the movement area, for example. This kind of attribute information may be realized by, for example, generating a hue histogram of the pixel value within a block group, and determining the ratio of the flesh color area. The attribute information that shows the image characteristics is useful information when the user is searching (including narrowing down) still image data based on attribute information or when putting still image data into database form.

As a search example, it is also possible to realize a structure whereby when the insertion window assumes movement in the leftward direction, for example, when the user clicks that image insertion window, only still image data that has a movement area that has a left direction movement vector as the attribute information is extracted and presented to the user.

With the first embodiment described above, the attribute information is generated from frame image data contained in the moving image data, but it is also possible to have attribute information of the still image be generated according to information that the moving image data contains as attribute information which is information relating to, for example, the date, sound, or time sequence, etc. (e.g. sequence). Furthermore, it is also possible to include as attribute information estimated camera work such as panning and zooming. With the present invention, the attribute information of the still image data is generally acceptable if it is generated using information other than the information contained in the still image data from among the information contained in the moving image data.

Information relating to the time sequence can be used, for example, when inlaying a still image in a template image for which a plurality of still images can be placed in time sequence. The date can be used directly when there is a window that shows the date on a template image, for example. The sound can be used when generating an image file with sound when the template image file has an area for storing sound files.

Note that the attribute information of the still image data for the present invention is generated using the following processes, for example.
(1) A process of extracting still image data from moving image data,
(2) A process of generating still image data from moving image data (e.g. making sharper), or
(3) A process of comparing with other frame images.

With the first embodiment described above, an example is shown with which one movement area is detected in one still image data, but it is also possible to have a plurality of movement areas included in one still image data. When a plurality of movement areas are included, while each movement area is labeled, it is preferable to have attribute information attached to each of the movement areas. This is because by doing this, in a case when a plurality of subjects are included in a moving image, for example, it is possible to control the attribute information for each subject. By doing this, it is possible to do optimal trimming and other image processing or database control for each movement area, for example.

With the first embodiment described above, the moving image data is formed by non-interlace format frame image data, but the present invention may also be applied to interlace format moving image data. In this case, each frame image data of the embodiment described above correlates to still image data generated from still image data of odd number fields formed from image data of odd numbered scan lines and from still image data of even number files formed from image data of even numbered scan lines.

With the first embodiment of the present invention, the gradient method is used as the frame-to-frame comparison process used for determining whether or not there is block movement, and movement is detected as block "movement," but it is also possible to detect movement of the subject using another method called the frame-to-frame difference method or the background difference method, for example. Furthermore, it is also possible to detect not only movement of the subject, but also changes in the subject such as changes in the size of or rotation of the subject.

With the first embodiment described above, when a movement area is extracted from among the still images and an insertion window is inserted, an empty area is determined so as to match the insertion window, but it is also possible to extract in advance a movement area of a still image, for example. By doing this, there is the advantage of being able to make the data size smaller for the still image data.

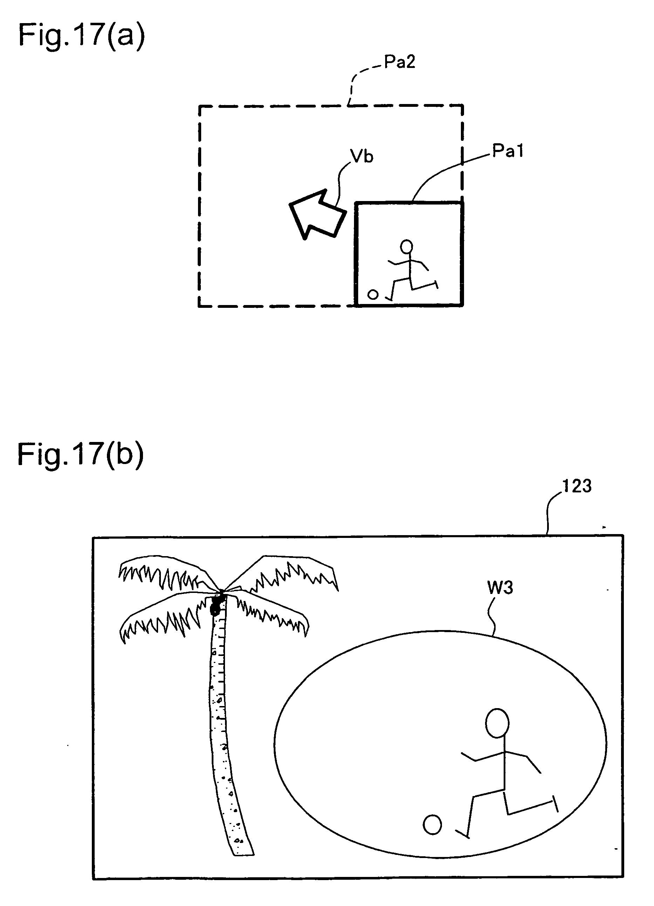

In this kind of case, it is preferable to extract in advance images that show a specified area on the movement direction side in addition to the movement area. The specified area would be placed on the movement direction side of the movement area Pa1 as shown in figure 17(a), for example. Still image data that has a image area Pa2 generated in this way can be matched to the image insertion window W3 by deleting the part that juts out from the image insertion window W3 when inserted in the image insertion window W3 shown in figure 17 (b), for example. Note that the size of the specified area may also be set as a size set in advance (1 to 2 times, for example), or may be determined according to the size to the movement vector.

Also, when generating still image data that has a square image area, the specified area is preferably placed in the closest direction (extension direction) to the movement direction of the four directions of up, down, left, and right in relation to the movement area. It is sufficient to have the size of the specified area in the extension direction have a size that is 1 to 2 times the movement area, for example. This is because the aspect ratio of the insertion window is generally in a scope of 1 to 3 times.

With the first embodiment described above, an empty area was provided only on the side of the movement direction of the movement area, but it is also possible to provide an empty area that is smaller than the movement direction side at the opposite side of the movement direction as well, for example. With the present invention, generally, it is acceptable if the structure is such that an area that is larger than the opposite side of the movement direction is added to the movement direction side of the movement area.

B-1. Structure of the Image Generation and Processing Device for an Example:

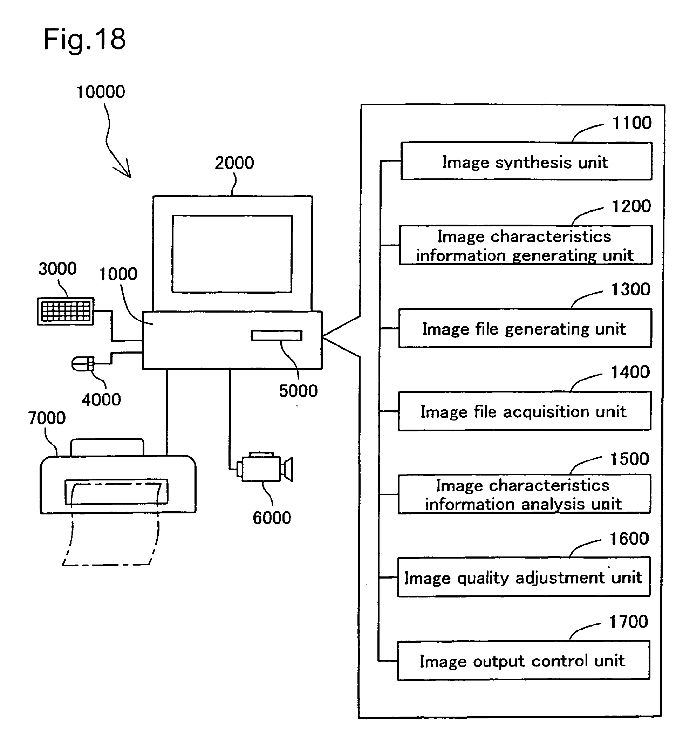

Figure 18 is an explanatory diagram that schematically shows the structure of an image generating and processing device according to the example. This image generating and processing device 10000 consists of a computer 1000, a keyboard 3000 and a mouse 4000 as devices for inputting information to the computer 1000, a display 2000 and a printer 7000 as devices for outputting information, and a digital video camera 6000 and a CD-R/RW drive 5000 that inputs moving image data to the computer 1000. Note that it is also possible to provide as the device for inputting moving image data a drive device that is able to read data from various types of information recording media such as a DVD drive.

The computer 1000 generates a high definition image file by executing an application program for generating a high definition image file under a specified operating system. A high definition image file includes high definition image data and image characteristics information. High definition image data is a still image that has higher definition than the frame image that shows frame image data that is generated by synthesizing a plurality of frame image data that forms the moving image data. Image characteristics information contains information for limiting image quality adjustments on the high definition image data. This application program has the functions of an image synthesis unit 1100, an image characteristics information generating unit 1200, and an image file generating unit 1300.

Also, the computer 1000 performs image quality adjustments on high definition images by executing an application program for performing image quality adjustments on high definition images under a specified operating system. The image quality adjustment of high definition images is a process that performs image conversion of high definition image data to adjust the image quality of high definition images that show high definition image data included in a high definition image file. This application program has the functions of an image file acquisition unit 1400, an image characteristics information analysis unit 1500, and an image quality adjustment unit 1600.

Furthermore, the computer 1000 is equipped with an image output control unit 1700 that controls output to an image output device.

B-2. Summary of the Process of the Example:

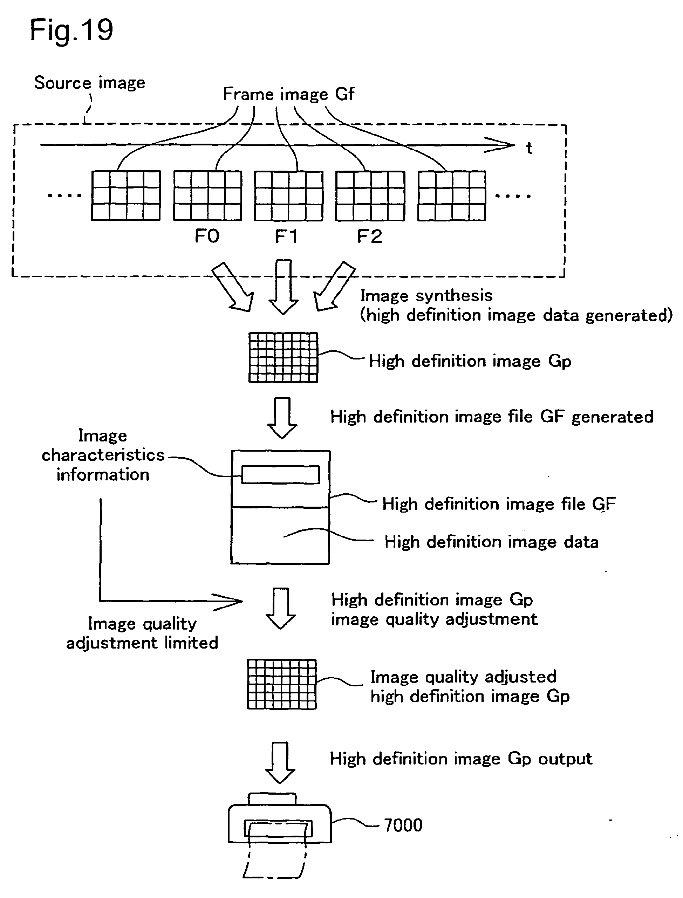

Figure 19 is an explanatory diagram that shows the summary of the process by the image generating and processing device. Shown in figure 19 is the flow of the process of the image generating and processing device 10000 (figure 18) generating high definition image data, generating a high definition image file GF, performing image quality adjustment of the high definition image Gp, and printing the high definition image Gp using the printer 7000.

In the upper half of figure 19, a plurality of frame images Gf that form a moving image used for generating high definition image data (hereafter referred to as "source moving image") are shown aligned in time sequence from left to right in the figure. Note that for this specification, the moving image data that shows the source moving image is called "source moving image data."

The frame image F0 is an image that is the reference for image synthesis for generating high definition image data (hereafter called "reference frame image"), and the two frame images F1 and F2 immediately after that are images that are subject to image synthesis (hereafter called "subject frame images"). Note that in the following explanation, the same code number is used for an image and the image data that shows that image.

The image generating and processing device 10000 (figure 18) generates high definition image data using the reference frame image data F0 that shows the reference frame image F0, and the subject frame image data F1 and F2 that show the subject frame images F1 and F2. Note that in this specification, the reference frame image data F0 and the subject frame image data F1 and F2 together are called "synthesis source frame image data."

Figure 19 shows the high definition image Gp generated by synthesizing the synthesis source frame image data F0, F1, and F2. The high definition image Gp is generated as an image of higher definition than the frame image Gf that forms the source moving image.

Next, the image generating and processing device 10000 generates image characteristics information for limiting specific image quality adjustments on high definition image data, and generates a high definition image file GF that includes the high definition image data and the image characteristics information. Figure 19 shows the generated high definition image file GF.

Also, the image generating and processing device 10000 performs image quality adjustments on high definition image data contained in the high definition image file GF either by instruction of the user or automatically. At this time, the image generating and processing device 10000 analyzes the image characteristics information contained in the high definition image file GF, and according to those analysis results, there are limits on the execution of specific image quality adjustments on high definition image data. Figure 19 shows the status of the image quality adjustments being limited according to the image characteristics information, and also shows the image quality adjusted high definition image Gp.

Then, the image generating and processing device 10000 outputs the image quality adjusted high definition image Gp using the printer 7000.

Following, we will give a detailed explanation of the contents of generating the high definition image file and doing image quality adjustments of the high definition image by the image generating and processing device 10000.

B-3. Generation of High Definition Image Files for the Example:

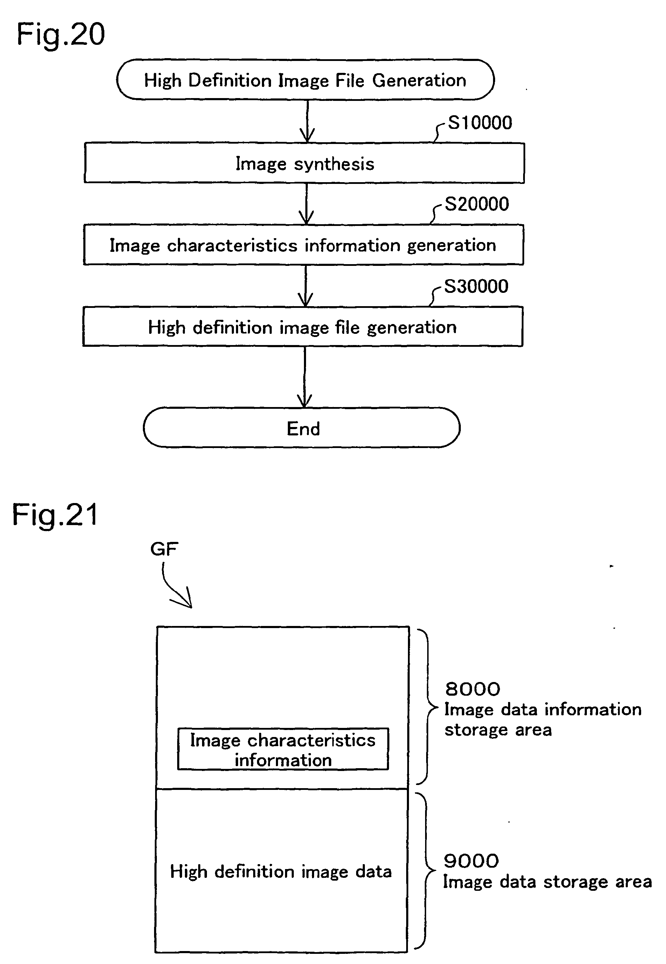

Figure 20 is a flow chart that shows the flow of generating a high definition image file by the image generating and processing device. At step S10000, the image synthesis unit 1100 (figure 18) of the image generating and processing device 10000 performs image synthesis. As described above, image synthesis by the image synthesis unit 1100 is performed using the synthesis source frame image data F0, F1, and F2. In the display of the display 2000 that replays the moving image recorded by the digital video camera 6000, when instructions for generating a high definition image are input by the user, the frame image displayed in the display 2000 is selected as the reference frame image F0, for example. Also, the two frame images immediately after the reference frame image F0 are selected as the subject frame images F1 and F2.

The image synthesis unit 1100 references the absolute frame numbers from the source moving image recorded in the digital video camera 6000, acquires the synthesis source frame image data F0, F1, and F2, synthesizes the synthesis source frame image data F0, F1, and F2, and generates high definition image data. Note that in this specification, an "absolute frame number" means a serial number counted from the first frame image data in the moving image data. We will give a detailed explanation of image synthesis by the image synthesis unit 1100 later.

At step S20000, the image characteristics information generating unit 1200 (figure 18) generates image characteristics information. As described above, image characteristics information includes information for limiting specific image quality adjustments on high definition image data. Here, the purpose of limiting specific image quality processing is not only to prevent a decrease in quality or an increase in processing time due to re-execution of image quality adjustments already performed on high definition image data, but also to limit execution of image quality adjustments for which there is a risk of causing a decrease in image quality if performed on high definition image data.

With this example, the specific image quality adjustment is sharpness adjustment, and image characteristics information is generated as information that prohibits sharpness adjustment. This is because from the characteristics of the high definition image data to be described later, when sharpness adjustment is executed on high definition image data, there is an especially big risk of a decrease in image quality. In specific terms, the image characteristics information generating unit 1200 generates a flag that means that sharpness adjustments are prohibited on high definition image data.

At step S30000, the image file generating unit 1300 (figure 18) generates a high definition image file. The high definition image file GF is an image file that contains high definition image data and image characteristics information as described above.

Figure 21 is an explanatory diagram that schematically shows an example of the internal structure of a high definition image file. The high definition image file GF consists of an image data storage area 9000 that stores high definition image data and an image data information storage area 8000 that stores image data information. Here, image data information means various types of information relating to high definition image data, and within this, image characteristics information is included. High definition image data is stored in JPEG format, for example, and image data information is stored in TIFF format, for example. Note that the terms file structure and data structure used in this example mean the structure of a file or data in a state when the file or data, etc. is stored in a memory device.

A high definition image file GF is basically acceptable if it includes the aforementioned image data storage area 9000 and the image data information storage area 8000, and the file structure can be according to an already standardized file format. Following, we will give a specific explanation regarding a case when a high definition image file GF of this example is made to conform to a standardized file format.

The high definition image file GF may use a file structure according to a digital still camera image file format standard (Exif), for example. The specifications of an Exif file are determined by the Japanese Electronics and Information Technology Association (JEITA). Also, the Exif file format, the same as the conceptual diagram shown in figure 21, has a JPEG image data storage area that stores JPEG format image data, and an affiliated information storage area for storing various types of information relating to the stored JPEG image data. The JPEG image data storage area correlates to the image data storage area 9000 in figure 21, and the affiliated information storage area correlates to the image data information storage area 8000 in figure 21. Note that as is well known by those in the industry, with Exif file format files, a tag is used to specify each data, and each data is called by its tag name.

In the affiliated information storage area, the image characteristics information shown in figure 21 is stored according to a stipulated address or offset value. Image characteristics information is in an undefined area within the affiliated information storage area, and may be stored within a user defined area released by the user.

As explained above, the image generation and processing device 10000 of this example is able to generate high definition image file GF that contains high definition image data and image characteristics information.

B-4. Image Quality Adjustment of High Definition Images for the Example:

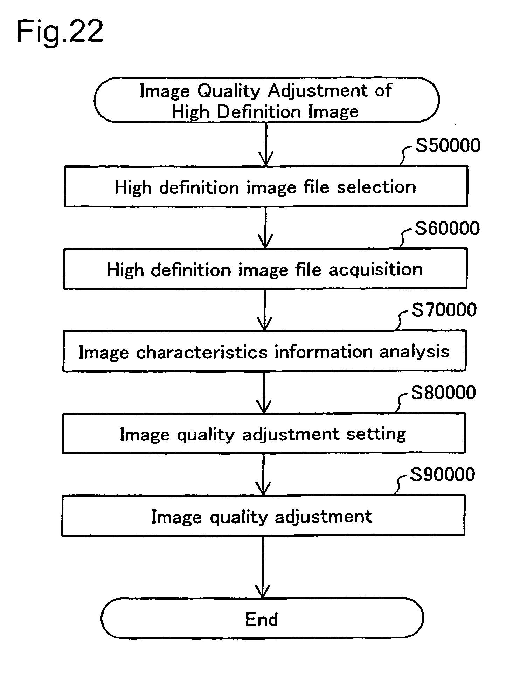

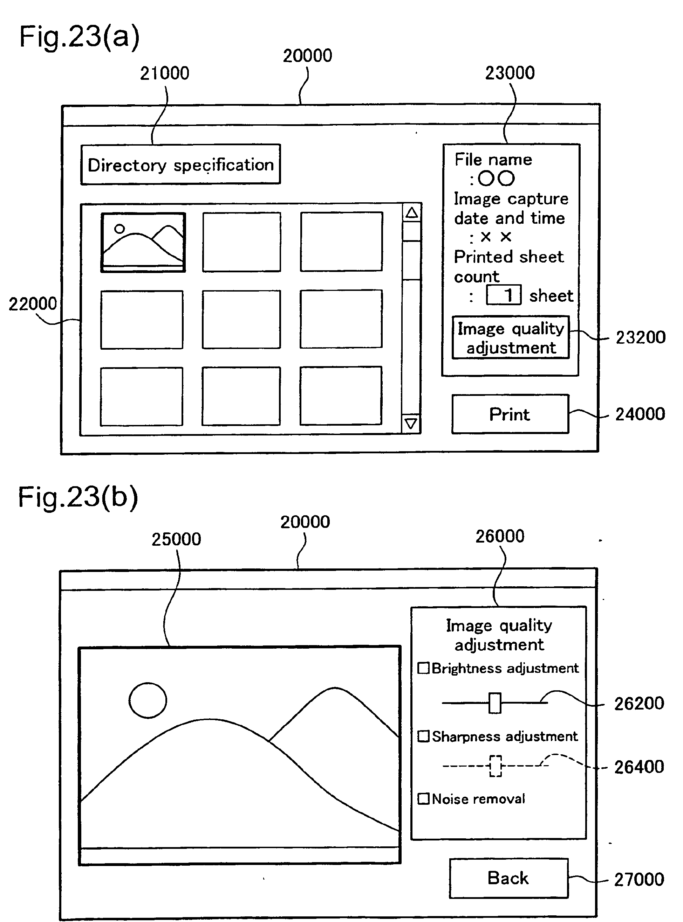

Figure 22 is a flow chart that shows the flow of image quality adjustment of high definition images by the image generating and processing device. Also, figure 23 is an explanatory diagram that shows an example of a user interface with the image generating and processing device when performing image quality adjustment on high definition images. At step S50000 (figure 22), the user selects a high definition image file GF that is subject to image quality adjustment.

Figure 23(a) and 23(b) show the user interface screen 20000 displayed in the display 2000 (figure 18). Then, figure 23 (a) shows the initial screen of the user interface screen 20000. Displayed in the user interface screen 20000 are a directory specification button 21000, a thumbnail image display screen 22000, an image information screen 23000, an image quality adjustment button 23200, and a print button 24000.

The user operates the directory specification button 21000 and is able to specify a directory for storing the image file for which to display a thumbnail image in the thumbnail image display screen 22000. Displayed in the thumbnail image display screen 22000 are thumbnail images of all the image files stored in the specified directory.

The user references the thumbnail images displayed in the thumbnail image display screen 22000 and selects an image file to be subject to image quality adjustment. In figure 23 (a), the thumbnail image of the selected image file is shown enclosed by a bold frame. With the example in figure 23, the selected image file is a high definition image file GF.

Note that when the user selects an image file, the image information of the selected image file is displayed in the image information screen 23000. Also, the user is able to operate the image information screen 23000 to specify the number of sheets printed, and is able to operate the print button 24000 to give printing instructions for the image included in the selected image file.

At step S60000 (figure 22), the image file acquisition unit 1400 (figure 18) acquires the high definition image file selected at step S50000. At step S70000, the image characteristics information analysis unit 1500 (figure 18) analyzes the image characteristics information contained in the acquired high definition image file.

At step S80000, the user makes image quality adjustment settings. The user is able to operate the image quality adjustment button 23200 (figure 23) to make image quality adjustment settings on the high definition image data contained in the selected high definition image file GF. When the user operates the image quality adjustment button 23200, the image quality adjustment execution screen shown in figure 23 (b) is displayed in the user interface screen 20000. At this time, displayed in the user interface screen 20000 are the image display screen 25000, the image quality adjustment screen 26000, and the "Back" button 2700 for going back to the initial screen shown in figure 23 (a).

Displayed in the image display screen 25000 is a high definition image that shows the high definition image data contained in the selected high definition image file GF. Displayed in the image quality adjustment screen 26000 are items for which image quality adjustment can be performed and at the same time, displayed are slider bars 26200 and 26400 for the user to specify image quality adjustment volumes for each item.

At this time, the image quality adjustment unit 1600 (figure 18) limits execution of image quality adjustments on high definition image data according to the results of analysis of image characteristics information at step S70000. With this example, the image characteristics information contained in the high definition image file GF is generated as information that prohibits sharpness adjustment. Because of this, the image quality adjustment unit 1600 limits execution of sharpness adjustment on high definition image data according to image characteristics information analysis results.

Specifically, as shown in figure 23, the sharpness adjustment slider bar 26400 used for adjusting sharpness within the image quality adjustment items displayed on the image quality adjustment screen 26000 is, for example, displayed as a dotted line, and operation by the user is not possible. Therefore, the user is not able to give instructions to do sharpness adjustment. In this way, sharpness adjustment on high definition image data is prohibited.

At step S90000 (figure 22), the image quality adjustment unit 1600 (figure 18) performs image quality adjustment on high definition image data contained in the high definition image file GF according to the user settings.

In this way, the image generating and processing device 100000 of this example is able to prohibit sharpness adjustment for which there is an especially high risk of a decrease in image quality by analyzing the image characteristics information when executing image quality adjustment on high definition image data contained in the high definition image file GF. Therefore, it is possible to inhibit a decrease in image quality when performing image quality adjustment on high definition image data that shows a high definition image generated by synthesizing a plurality of frame image data.

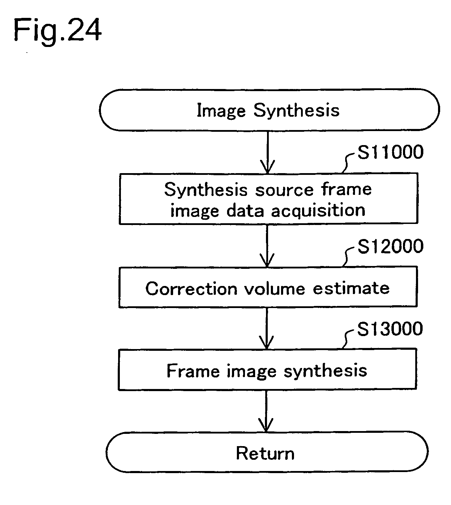

B-5. Image Synthesis for the Example:
Following, we will give a detailed explanation regarding image synthesis for generating the high definition image files described above (step S10000 of figure 20). Figure 24 is a flow chart that shows the flow of image synthesis by the image synthesis unit. At step S11000, the image synthesis unit 1100 (figure 18) acquires synthesis source frame image data. As described above, synthesis source frame image data is frame image data used for image synthesis within the frame image data in the source moving image data, and with this embodiment, it is frame image data that shows a total of three frame images Gf, the reference frame image F0 and the subject frame images F1 and F2. The synthesis source frame image data acquired by the image synthesis unit 1100 is temporarily stored in a memory device (not illustrated) such as a memory or hard disk, etc.

At step S12000, the image synthesis unit 1100 executes an estimate of the correction volume for correcting the mutual skew of each frame image (positional skew) of the acquired synthesis source frame image data. With this correction volume estimate, respective estimates are made for the correction volume for correcting positional skew of the reference frame image F0 in relation to the subject frame images F1 and F2.

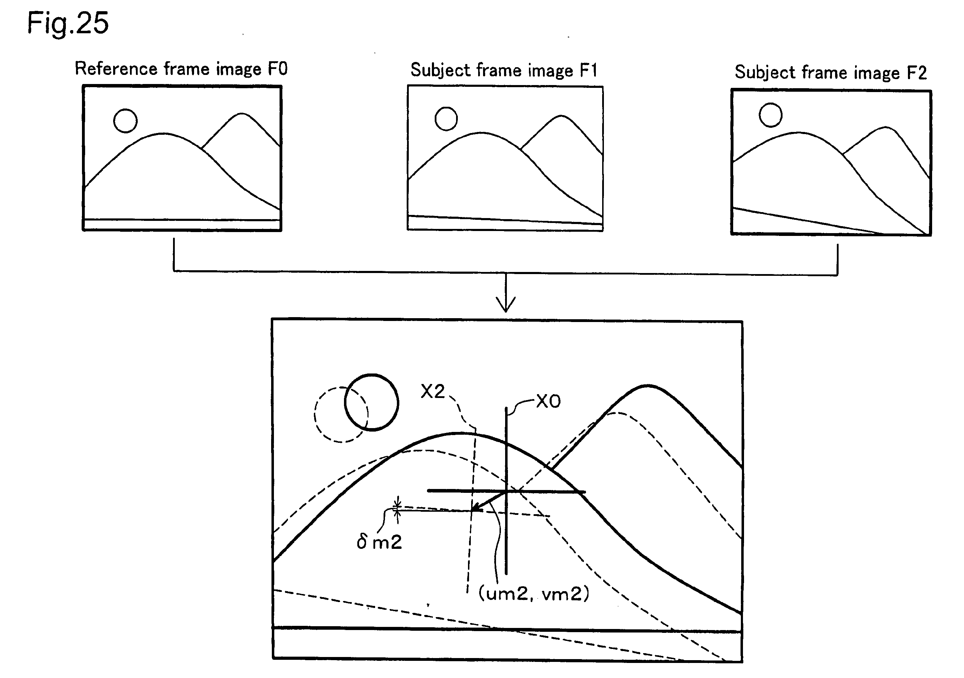

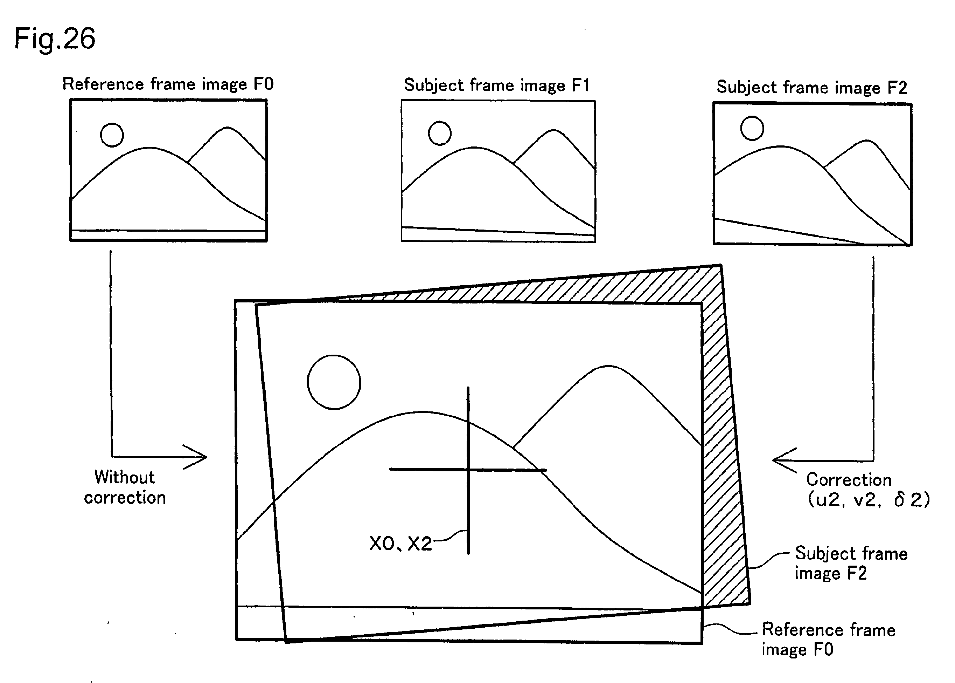

Figure 25 is an explanatory diagram that shows the positional skew of the reference frame image and the subject frame images, and figure 26 is an explanatory diagram that shows the correction of the positional skew of the reference frame image and the subject frame images.

In the explanation below, serial numbers n (n = 0, 1, 2) are given to the frame images that show the three acquired frame image data, and the frame images will be called using these serial numbers n. Specifically, a frame image of serial number n will be called frame image Fn. For example, the frame image for which the serial number n value is 0 will be called frame image F0. Here, F0 shows the reference frame image F0, and F1 and F2 show subject frame images F1 and F2.

The image positional skew shows a combination of translational (horizontal or vertical direction) skew and rotational skew. Figure 25 shows the status of the edge of the reference frame image F0 overlapping with the edge of the subject frame image F2. Also, a virtual cross image X0 is added to the center position on the reference frame image F0, and with this cross image X0 having the same skew as the subject frame image F2, a cross image X2 that is an image of the result of skew on the subject frame image F2 is shown. Also, the reference frame image F0 and the cross image X0 are shown by a bold solid line and the subject frame image F2 and the cross image X2 are shown by a thin dotted line.

With this example, "um" shows the horizontal direction translational skew volume, "vm" shows the vertical direction translational skew volume, and "δm" shows the rotational skew volume. Also, these skew volumes are shown as "umn," "vmn," and "δmn" for the subject frame image Fn (n = 1, 2). For example, as shown in figure 25, the subject frame image F2 has translational skew and rotational skew occur in relation to the reference frame image F0, and the skew volume is shown as um2, vm2, and δm2.

Here, to synthesize the subject frame images F1 and F2 and the reference frame image F0, to eliminate the skew between the subject frame images F1 and F2 and the reference frame image F0, the positional skew of each pixel of the subject frame images F1 and F2 are corrected. The horizontal direction translational correction volume used for this correction is shown as "u," the vertical direction translational correction volume is shown as "v," and the rotational correction volume is shown as "δ." Also, these correction volumes are shown as "un," "vn," and "δn" for the subject frame images Fn (n = 1, 2). For example, the correction volumes for the subject frame image F2 are shown as u2, v2, and δ2.

Here, correction means moving the position of each pixel of the subject frame images Fn (n = 1, 2) positions for which a movement of un in the horizontal direction, a movement of vn in the vertical direction, and a rotation of δn have been implemented. Therefore, the correction volumes un, vn, and δn regarding the subject frame images Fn (n = 1, 2) are shown by the relationships of un = -umn, vn = -vmn, and δn = - δmn. For example, the correction volumes u2, v2, and δ2 for the subject frame image F2 are shown as u2 = -um2, v2 = -vm2, and δ2 = - δm2.

From the above, for example as shown in figure 26, using correction volumes u2, v2, and δ2, by correcting the position of each pixel of the subject frame image F2, it is possible to eliminate the skew between the subject frame image F2 and the reference frame image F0. At this time, when the post-correction subject frame image F2 and the reference frame image F0 are displayed on the display 2000 (figure 18), as shown in figure 26, the subject frame image F2 is displayed in a state partially matching in relation to the reference frame image F0. Note that to show the results of this correction in an easy to understand way, in figure 26 as well, the same as in figure 25, a virtual cross image X0 and cross image X2 are noted, and as shown in figure 26, as the result of correction, the skew between the cross image X2 and the cross image X0 is eliminated, and they match.

Similarly, for the subject frame image F1 as well, correction is performed using each value of the correction volumes u1, v1, and δ1 and the position of each pixel of the subject frame image F1 can be moved.

However, the correction volumes un, vn, and δn for each subject frame image Fn (n = 1, 2) are calculated using a specified calculation equation according to the pattern matching method or gradient method and the least squares method, for example, based on the reference frame image F0 image data and the subject frame images F1 and F2 image data at the image synthesis unit 1100 (figure 18). Then, the calculated correction volumes un, vn, and δn are stored in a specific area within memory (not illustrated) as transitional correction volume data un and vn and as rotational correction volume data δn.

With this example, the image synthesis unit 1100 uses estimated correction volumes un, vn, and δn to correct position skew between the reference frame image F0 and the subject frame images F1 and F2.

At step S13000 (figure 7), the image synthesis unit 1100 (figure 18) synthesizes the reference frame image data and the corrected subject frame image data and generates high definition image data that shows the high definition image Gp. At this time, of the pixels that form the generated high definition image Gp (hereafter called "generated pixels"), for pixels which do not exist in the reference frame image F0 or either of the subject frame images F1 and F2, the image synthesis unit 1100 uses pixel data that shows the pixel value of pixels that exist around those generated pixels (gradation data that shows gradation values) and makes items high definition while synthesizing by performing a specified interpolation process.

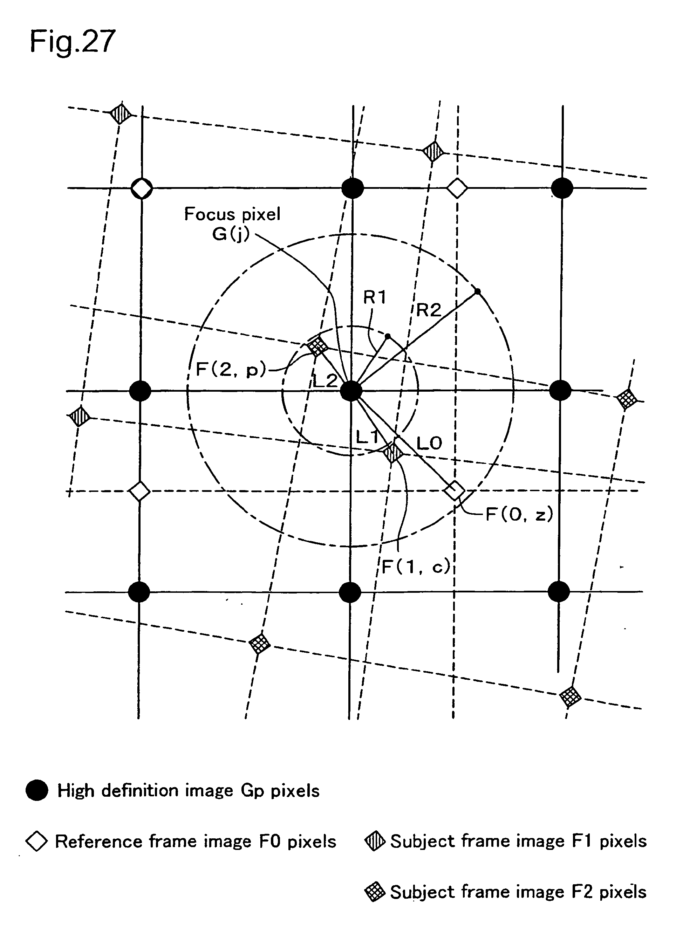

Figure 27 is an explanatory diagram that shows an expanded view of the state of the reference frame image and the subject frame images placed with skew corrected. In figure 27, the center positions of pixels of the high definition image Gp are shown as black circles, the center positions of pixels of the reference frame image F0 are shown as blank squares, and the center positions of pixels of the subject frame images F1 and F2 after correction are shown by cross hatched squares. Note that following, the number of pixels of the high definition image Gp is 1.5X both vertically and horizontally in relation to the number of pixels of the reference frame image F0. Also, the center of the pixels of the high definition image Gp are in positions such that they overlap with the center of the pixels of the reference frame image F0 every two pixels. However, the centers of the pixels of the high definition image Gp do not necessarily have to be positioned to overlap the centers of the pixels of the reference frame image F0. For example, all of the centers of the pixels of the high definition image Gp may also be positioned in between the centers of the pixels of the reference frame image F0, and a variety of positions may be used. Also, the image size ratio of the high definition image Gp and the reference frame image F0 also is not limited to being 1.5X both vertically and horizontally, and it is possible to set this to various values.

Following, we will give an explanation focusing on the pixel G (j) (hereafter called "focus pixel G (j)") that is within the high definition image Gp. Here, the variable j is an identification number given to all pixels that form the high definition image Gp. The way that identification numbers are given to pixels of the high definition image Gp can be, for example, with the pixel at the upper left edge of the image as j = 1, to have the pixel adjacent to that at the right be j = 2, and so on, adding numbers in sequence in the horizontal rightward direction, and when numbers are given all the way to the right edge pixel of the image, to move one level down to the pixel at the left edge, and to similarly add numbers in the horizontal rightward direction, adding numbers to pixels up to the final, lower right edge pixel.

Of the pixels of the reference frame image F0 and the subject frame images F1 and F2, the image synthesis unit 1100 (figure 18) searches for pixels for which the distance between the center of that pixel and the center of the focus pixel G (j) is less than a specified threshold value R, and sets the detected pixels as "vicinity pixels."

With the example shown in figure 27, when the threshold value R value is R1, the distance L2 between the center of the pixel F (2, p) of the subject frame image F2 and the center of the focus pixel G (j) is smaller than R1, so the pixel F (2, p) is set as a vicinity pixel. Meanwhile, the distance (L0, L1) between the respective pixel centers of the reference frame image F0 pixel F (0, z) and the subject frame image F1 pixel F (1, c) and the center of the focus pixel G (j) are greater than R1, so these are not set as vicinity pixels. Note that in this specification, the i-th pixel of the frame image Fn is noted as F (n, i), and variable i is an identification number added to all pixels that form the frame image Fn. The method of adding an identification number to the pixels of the frame image Fn is the same method of adding an identification number to the pixels of the high definition image Gp described above. Also, c, p, and z show respective constants.

Also, when the threshold value R value is R2, the reference frame image F0 pixel F (0, z) and the subject frame image F1 pixel F (1, c) and the subject frame image F2 pixel F (2, p) are all set as vicinity pixels.

Next, the image synthesis unit 1100 generates the focus pixel G (j) pixel data using the set vicinity pixels and the pixel data with the other pixels that enclose the focus pixel G (j) in the frame image that includes those vicinity pixels using various interpolation processes such as the bilinear method, the bicubic method, and the nearest neighbor method. In the example in figure 27, when the threshold value R value is R1, since the subject frame image F2 pixel F (2, p) is set as a vicinity pixel, generation of the pixel data of the focus pixel G (j) is performed using the pixel data of the four pixels that enclose the focus pixel G (j) for the subject frame image F2. Also, when the threshold value R value is R2, since the reference frame image F0 pixel F (0, z) and the subject frame image F1 pixel F (1, c) are also set as vicinity pixels, generation of the pixel data of the focus pixel G (j) is performed using the pixel data of the total of 12 pixels that enclose the focus pixel G (j) for the reference frame image F0 and the subject frame images F1 and F2. Following, we will explain an example of interpolation processing using the bilinear method when the threshold value R value is R1.

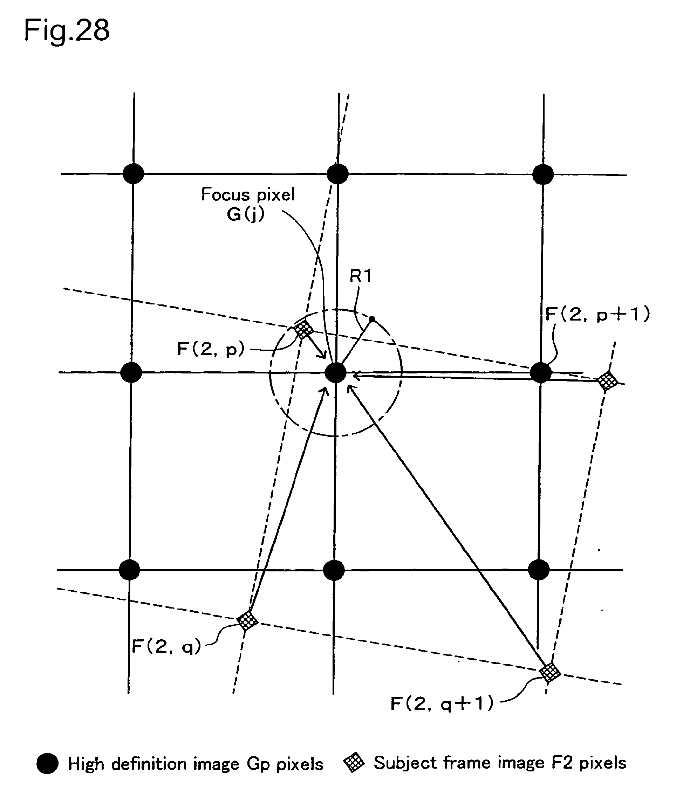

Figure 28 is an explanatory diagram that shows interpolation processing using the bilinear method. Figure 28 shows an example when the threshold value R value is R1. The focus pixel G (j) is a pixel that does not exist in the reference frame image F0 or the post skew correction subject frame images F1 and F2, so there is no pixel data. Also, as described above, the pixel F (2, p) of the subject frame image F2 is set as a vicinity pixel. At this time, the image synthesis unit 1100 (figure 18) performs interpolation processing using the four pixels (F (2, p), F (2, p +1), F (2, q), F (2, Q +1)) that enclose the focus pixel G (j) for the subject frame image F2. Note that in this specification, the pixels that enclose the focus pixel G (j) of the frame image used for interpolation processing of the focus pixel G (j) are called peripheral pixels, and the center of the peripheral pixels is called the peripheral pixel center.

First, the image synthesis unit 1100 separates the square enclosed by the four peripheral pixel centers into four triangles using four line segments that connect the centers of the peripheral pixel centers and the center of the focus pixel G (j). Then, using the area of the square enclosed by the four peripheral pixel centers and the area of the four triangles within this square, the weighting coefficient of each peripheral pixel is calculated. Specifically, for each peripheral pixel, the ratio of the total of the area of the two triangles that do not contact the peripheral pixel center among the four triangles in relation to the area of a square enclosed by the four peripheral pixel centers is calculated, and the calculated value is the weighting coefficient of that peripheral pixel. In this way, when the weighting coefficient is calculated, as the peripheral pixel has a distance closer from the focus pixel G (j), the weighting coefficient is larger.

The pixel data of the focus pixel G (j) is calculated by totaling the products of the pixel data of that peripheral pixel and the weighting coefficient of that peripheral pixel for each of the peripheral pixels.

Note that as when the threshold value R value is R2 in figure 27, when a plurality of frame images are used to generate the pixel data of the focus pixel G (j), the weighting coefficient is calculated in the same way as described above, and the pixel data is generated by totaling the product of the pixel data of the peripheral pixel and the weighting coefficient of that peripheral pixel.

As explained above, image synthesis by the image synthesis unit 1100 changes the processing contents by the value of threshold value R. Specifically, the smaller that the threshold value R value is, the lower the frame image count used for generating pixel data of each pixel of the high definition image Gp. Meanwhile, the larger the value of the threshold value R, the greater the frame image count used for generating pixel data of each pixel of the high definition image Gp. Then, for generation of the high definition image Gp, depending on the number of frame images used for generating pixel data of each pixel of the high definition image Gp, the image quality of the generated high definition image Gp changes.

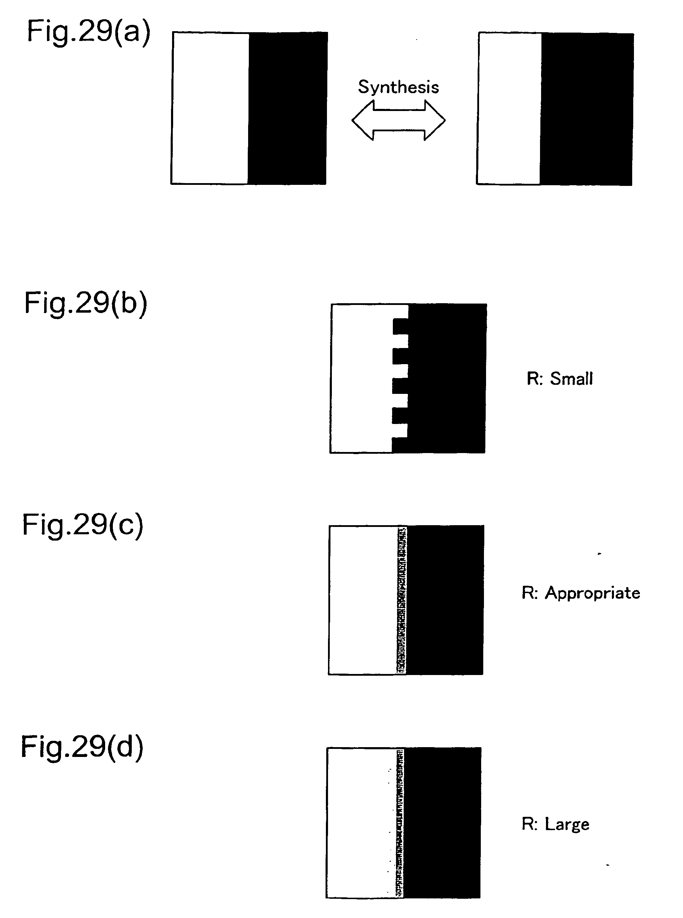

Figure 29(a), 29(b), 29(c), and 29(d) are explanatory diagrams that conceptually show the relationship between the size of the threshold value R and the image quality of the high definition image Gp. For the estimate of the correction volume according to the image synthesis unit 1100 (step S12000 in figure 7), there are cases when errors occur for the estimated correction volume due to the effect of lens distortion or noise, or local movement, etc. during moving image generation. Figure 29 shows an example when an error has occurred for the correction volume estimate. Figure 29 (a) shows a partial expanded view of a corresponding image in the two post skew corrected frame images used for image synthesis. As shown in figure 29 (a), due to the effect of an error in the correction value estimate, there is skew at the edge part of both images.

Figures 29 (b) to (d) show the results of the image synthesis unit 1100 performing image synthesis using the two images shown in figure 29 (a). Figure 29 (b) shows the image synthesis results when the threshold value R value is small, figure 29 (c) shows the image synthesis results when the threshold value R value is appropriate, and figure 29 (d) shows the image synthesis results when the threshold value R value is large.

As shown in figure 29 (b), when the threshold value R value is small, the frame image count used for generating the pixel data of each pixel of the high definition image Gp is low, so it is easy to have an image with a high level of sharpness. However, due to the effect of errors in the correction volume estimate, it is easy for there to be a double image at the edge part of the image. Also, the noise reduction effect is low.

Meanwhile, as shown in figure 29 (d), when the threshold value R value is large, the frame image count used for generating pixel data of each pixel of the high definition image Gp is high, so the effect of the error in the correction volume estimate is averaged, and the skew of the edge part of the image is not easy to notice. Noise is also averaged, so decrease also occurs easily. However, the image data is also averaged even more, so it is easy to have an image with low sharpness occur.

In this way, with generation of the high definition image Gp, an increase in sharpness and the inhibition of the effect of the correction volume estimate error and the noise decrease are antithetical. In light of this, when an appropriate value is set for the threshold value R value, as shown in figure 29 (c), it is possible to get an image for which both are balanced for the high definition image Gp. In this way, the threshold value R for image synthesis by the image synthesis unit 1100 is adjusted experimentally in advance so as to achieve a balance between the increase in sharpness and the suppression of the effect of correction volume estimate error and noise reduction for the generated high definition image Gp.

Because of this, when a sharpness adjustment is done on the high definition image data that shows the generated high definition image Gp, there is the risk that an image such as that shown in figure 29 (b) or 29 (d) will result. Therefore, when sharpness adjustment is executed on high definition image data, there is an especially big risk of image quality decreasing.

B-6. Variation Examples of the Example:
With the example described above, the image characteristics information is generated as information that prohibits sharpness adjustment, but it can also be generated as information that limits the sharpness adjustment range. Specifically, the limit on sharpness adjustment includes both prohibiting sharpness adjustment and limiting the adjustment range of sharpness adjustment.

When the adjustment range of the sharpness adjustment is limited on high definition image data, for example, the sharpness adjustment slide bar 26400 for the image quality adjustment screen 26000 of the user interface screen 20000 shown in figure 6 (b) is displayed with the slide range narrow, and the range for which the user can specify sharpness adjustment is limited. Even when this is done, it is possible to inhibit the decrease in image quality when performing image quality adjustment on high definition image data.

With the example described above, as the image characteristics information, a flag that means prohibition of sharpness adjustment on high definition image data is generated, but as image characteristics information, it is also possible to generate a flat that means that the image data contained in an image file is high definition image data. When performing image quality adjustment on an image file that contains this kind of image characteristics information, the image quality adjustment unit 1600 (figure 18) recognizes that the image data contained in the image file is high definition image data, and limits the sharpness adjustment on the image data. Even when this is done, it is possible to inhibit the decrease in image quality when performing image quality adjustment on high definition image data.

With the example described above, the specific image quality adjustment is sharpness adjustment, but the specific image quality adjustment may also be another image quality adjustment that is not executed on high definition image data at the image synthesis unit 1100 (figure 18). Even when this is done, from the characteristics of the high definition image data, there is a limit on execution of image quality adjustment for which there is a risk of causing a decrease in image quality when performed on high definition image data, and it is possible to inhibit the decrease in image quality that comes with image quality adjustment. Also, the specific image quality adjustment may also be an image quality adjustment already performed on high definition image data. Even when this is done, it is possible to prevent a decrease in image quality and an increase in processing time due to re-executing image quality adjustment that has already been performed on high definition image data.

With the example described above, for the image quality adjustment performed on high definition image data by instruction of the user, we explained using an example of limiting specific image quality adjustment, but it is of course also possible to limit the specific image quality adjustment for image quality adjustment performed on high definition image data automatically.

With the example described above, the subject frame images are the two frame images immediately after the reference frame image, but it is also possible to set any selection method or selection count for the subject frame images. For example, it is possible to set the two frame images immediately before the reference frame image as the subject frame images. It is also possible to set frame images separated by a specified number of frames from the reference frame image as the subject frame images. Furthermore, it is possible to set three subject frame images. Note that it is also possible to have the user set the selection method and selection count for the subject frame image.

With the example described above, we had thumbnail images displayed in the thumbnail image display screen 22000, but it is also possible to display the image itself that shows the image data contained in the image file in the thumbnail image display screen 22000.

With the example described above, we explained using an example of generating high definition image data using a plurality of frame image data that form a moving image, but it is also possible to generate high definition image data using other image data other than frame image data. For example, it is also possible to generate high definition image data using a plurality of still image data.

With the example described above, we estimated skew correction volume using the three parameters of translational skew (horizontal direction u and vertical direction v) and rotational skew (δ) when estimating skew correction volume for the overall image, but it is not limited to this. For example, it is also possible to estimate skew correction volume with a changed parameter count and also to estimate the skew correction volume using another type of parameter.

C. Variation Example
Note that the present invention is not limited to the aforementioned embodiment, and it is possible to implement this in a variety of formats without straying from the key points, with the following kinds of variations possible, for example.

With the embodiment described above, an image file that contains generated still image data and attribute information was generated, but it is not absolutely necessary to have the still image data and the attribute information exist in the same file, and it is also possible to have associated separate files.

With the embodiment described above, it is possible to replace part of the structure that is realized using hardware with software, and conversely, it is also possible to replace part of the structure that is realized using software with hardware.

When part or all of the functions of the present invention are realized using software, that software (computer program) may be provided in a form stored in a recording medium that can be read by a computer. For this invention, "a recording medium that can be read by a computer" is not limited to a portable type recording medium such as a flexible disk or CD-ROM, but also includes internal storage devices internal to the computer such as various types of RAM and ROM etc., or external storage devices that are fixed to the computer such as a hard disk, etc.

## Claims

1. A still image data file generating method of generating a still image data file (GF), comprising:
a still image data generating step of generating at least one still image data from moving image data;
an attribute information generating step of generating attribute information of the still image data; and
a data file generating step of generating the still image data file (GF) containing the generated still image data and the attribute information, or
a data file generating step of generating the still image data file (GF) containing the generated still image data and of generating a separate file containing the attribute information, wherein the still image data file and the separate file are associated with each other,
wherein
the attribute information generating step includes a step of generating information available for image processing on the still image data in response to the generation of the still image data, as the attribute information,
**characterized in that**
the attribute information includes information specifying a movement area that is an area for which a movement is detected within an image area represented by the still image data.

2. The still image data file generating method according to claim 1, wherein
the moving image data includes a plurality of source still image data continuous in time sequence, wherein
the attribute information generating step includes a step of generating the attribute information using information other than information included in the still image data, among information included in the moving image data.

3. The still image data file generating method according to claims 1 or 2, wherein
the still image data generating step includes a step of extracting the movement area from the still image data.

4. The still image data file generating method according to any of claims 1 to 3, wherein
the attribute information includes movement information (Vb) indicative of a translational movement status of the movement area in the image area.

5. The still image data file generating method according to any of claims 1 to 4 , wherein
the attribute information includes object information indicative of a property of an object within the movement area.

6. An image processing method of performing image processing on a still image data included in a still image data file (GF) that contains the still image data and attribute information of the still image data and is provided by the still image data file generating method according to any of claims 1 to 5, wherein
the image processing method includes a step of extracting the movement area from the image area represented by the still image data, according to the attribute information.

7. The image processing method according to claim 6, wherein
the attribute information includes movement information (Vb) indicative of translational movement status, the translational movement status including a movement direction of the image area in the movement area, and
the image processing method includes a step of extracting an image of an area according to the movement information (Vb), the extracted area including the movement area with a specified area added on a movement direction side of the movement area.

8. The image processing method according to claim 7, wherein
the image processing method includes a step of extracting an image of an area according to the movement information (Vb), the extracted area including the movement area with specified areas added on the movement direction side and on an opposite side of the movement area, the specified area added on the movement direction side being larger than the specified area added on the opposite side.

9. The image processing method according to claim 7, wherein
the image processing method includes the steps of:
determining a shape (W1, W2, W3) of an image represented the still image data to be generated by the image processing; and
placing the movement area such that surplus area outside of the movement area within an image area having the determined shape (W1, W2, W3) is largely distributed in the movement direction.

10. The image processing method according to claim 9, wherein
the shape (W1, W2, W3) is a rectangle with a specified aspect ratio; and
the image processing method includes a step of placing the movement area such that surplus area outside of the movement area within the rectangle with the specified aspect ratio is more greatly distributed at one of up, down, left, and right sides, the one being closest to the movement direction.

11. A still image data file generating apparatus adapted to generate a still image data file, comprising:
a still image data generator (11) configured to generate at least one still image data from moving image data;
an attribute information generator (12) configured to generate attribute information of the still image data; and
a data file generator (13) configured to generate the still image data file (GF) containing the generated still image data and the attribute information, or configured to generate the still image data file (GF) containing the generated still image data and to generate a separate file containing the attribute information, wherein the still image data file and the separate file are associated with each other;
wherein
the attribute information generator (12) is configured to generate information available for image processing on the still image data in response to the generation of the still image data, as the attribute information,
**characterized in that**
the attribute information includes information specifying a movement area that is an area for which a movement is detected within an image area represented by the still image data.

12. An image processing apparatus for performing image processing on a still image data included in a still image data file (GF) that contains the still image data and attribute information of the still image data and is provided by the still image data file generating apparatus according to claim 11, wherein
the image processing apparatus is configured to extract the movement area from the image area represented by the still image data, according to the attribute information.

13. A computer program product for causing a computer (PC) to generate a still image data file (GF), the computer program product comprising:
a computer readable medium; and
a computer program stored on the computer readable medium, the computer program comprising:
a first program for causing the computer (PC) to generate at least one still image data from moving image data;
a second program for causing the computer (PC) to generate attribute information of the still image data; and
a third program for causing the computer (PC) to generate the still image data file (GF) containing the generated still image data and the attribute information, or for causing the computer (PC) to generate the still image data file (GF) containing the generated still image data and to generate a separate file containing the attribute information, wherein the still image data file and the separate file are associated with each other,
wherein
the second program includes a program for causing the computer (PC) to generate information available for image processing on the still image data in response to the generation of the still image data, as the attribute information,
**characterized in that**
the attribute information includes information specifying a movement area that is an area for which a movement is detected within an image area represented by the still image data.

14. A computer program product for causing a computer (PC) to perform image processing on a still image data included in a still image data file (GF) that contains the still image data and attribute information of the still image data and is provided by the computer program product according to claim 13, the computer program product comprising:
a computer readable medium; and
a computer program stored on the computer readable medium, wherein
the computer program comprises a program for causing the computer (PC) to extract the movement area from the image area represented by the still image data, according to the attribute information.

## Patentansprüche

1. Stillbilddatendateierzeugungsverfahren zum Erzeugen einer Stillbilddatendatei (GF), das aufweist:
einen Stillbilddatendateierzeugungsschritt zum Erzeugen mindestens eines Stillbilddatums aus Bewegtbilddaten,
einen Attributinformationserzeugungsschritt zum Erzeugen von Attributinformationen der Stillbilddaten, und
einen Datendateierzeugungsschritt zum Erzeugen der Stillbilddatendatei (GF), die die erzeugten Stillbilddaten und die Attributinformationen enthält, oder
einen Datendateierzeugungsschritt zum Erzeugen der Stillbilddatendatei (GF), die die erzeugten Stillbilddaten enthält, und zum Erzeugen einer getrennten Datei, die die Attributinformationen enthält, wobei die Stillbilddatendatei und die getrennte Datei aneinander zugeordnet sind,
wobei
der Attributinformationserzeugungsschritt einen Schritt zum Erzeugen von Informationen enthält, die zur Bildverarbeitung der Stillbilddaten als Antwort auf die Erzeugung der Stillbilddaten als die Attributinformationen verfügbar sind,
**dadurch gekennzeichnet, dass**
die Attributinformationen Informationen enthalten, die einen Bewegungsbereich spezifizieren, der ein Bereich ist, für den eine Bewegung innerhalb eines Bildbereiches erfasst wird, der durch die Stillbilddaten repräsentiert wird.

2. Stillbilddatendateierzeugungsverfahren nach Anspruch 1, wobei
die Bewegtbilddaten mehrere Quellstillbilddaten, die in zeitlicher Abfolge kontinuierlich sind, enthalten, wobei
der Attributinformationserzeugungsschritt einen Schritt zum Erzeugen der Attributinformationen unter Verwendung anderer Informationen als Informationen, die in den Stillbilddaten enthalten sind, unter Informationen, die im den Bewegtbilddaten enthalten sind, enthält.

3. Stillbilddatendateierzeugungsverfahren nach Anspruch 1 oder 2, wobei
der Stillbilddatenerzeugungsschritt einen Schritt zum Extrahieren des Bewegungsbereiches aus den Stillbilddaten enthält.

4. Stillbilddatendateierzeugungsverfahren nach einem der Ansprüche 1 bis 3, wobei
die Attributinformationen Bewegungsinformationen (Vb) enthalten, die einen Translationsbewegungsstatus des Bewegungsbereiches in dem Bildbereich angeben.

5. Stillbilddatendateierzeugungsverfahren nach einem der Ansprüche 1 bis 4, wobei
die Attributinformationen Objektinformationen enthalten, die eine Eigenschaft eines Objektes innerhalb des Bewegungsbereiches angeben.

6. Bildverarbeitungsverfahren zum Durchführen einer Bildverarbeitung von Stillbilddaten, die in einer Stillbilddatendatei (GF) enthalten sind, die die Stillbilddaten und Attributinformationen der Stillbilddaten enthält und durch das Stillbilddatendateierzeugungsverfahren nach einem der Ansprüche 1 bis 5 bereitgestellt wird, wobei
das Bildverarbeitungsverfahren einen Schritt zum Extrahieren des Bewegungsbereiches aus dem Bildbereich, der durch die Stillbilddaten repräsentiert wird, entsprechend den Attributinformationen enthält.

7. Bildverarbeitungsverfahren nach Anspruch 6, wobei
die Attributinformationen Bewegungsinformationen (Vb) enthalten, die einen Translationsbewegungsstatus angeben, wobei der Translationsbewegungsstatus eine Bewegungsrichtung des Bildbereiches in dem Bewegungsbereich enthält, und
das Bildverarbeitungsverfahren einen Schritt zum Extrahieren eines Bildes eines Bereiches entsprechend den Bewegungsinformationen (Vb) enthält, wobei der extrahierte Bereich den Bewegungsbereich zuzüglich eines spezifizierten Bereichs auf einer Bewegungsrichtungsseite des Bewegungsbereiches enthält.

8. Bildverarbeitungsverfahren nach Anspruch 7, wobei
das Bildverarbeitungsverfahren einen Schritt zum Extrahieren eines Bildes eines Bereiches entsprechend den Bewegungsinformationen (Vb) enthält, wobei der extrahierte Bereich den Bewegungsbereich zuzüglich spezifizierter Bereiche, die auf der Bewegungsrichtungsseite und auf einer gegenüberliegenden Seite des Bewegungsbereiches hinzugefügt sind, enthält, wobei der spezifizierte Bereich, der auf der Bewegurigsrichtungsseite hinzugefügt ist, größer als der spezifizierte Bereich ist, der auf der gegenüberliegenden Seite hinzugefügt ist.

9. Bildverarbeitungsverfahren nach Anspruch 7, wobei
das Bildverarbeitungsverfahren die folgenden Schritte enthält:
Bestimmen einer Gestalt (W1, W2, W3) eines Bildes, das die Stillbilddaten, die durch die Bildverarbeitung zu erzeugen sind, repräsentiert, und
Platzieren des Bewegungsbereiches derart, dass ein zusätzlicher Bereich außerhalb des Bewegungsbereiches innerhalb eines Bildbereiches, der die vorbestimmte Gestalt (W1, W2, W3) enthält, in der Bewegungsrichtung in hohem Maß verteilt ist.

10. Bildverarbeitungsverfahren nach Anspruch 9, wobei
die Gestalt (W1, W2, W3) rechteckig mit einem vorbestimmten Seitenverhältnis ist, und
das Bildverarbeitungsverfahren einen Schritt zum Platzieren des Bewegungsbereiches derart enthält, dass ein zusätzlicher Bereich außerhalb des Bewegungsbereiches innerhalb des Rechteckes mit dem bestimmten Seitenverhältnis an einer der aufwärtigen, abwärtigen, linken und rechten Seite stärker verteilt ist, wobei die eine am nächsten zur Bewegungsrichtung ist.

11. Stillbilddatendateierzeugungsvorrichtung, die ausgelegt ist, eine Stillbilddatendatei zu erzeugen, und die aufweist:
einen Stillbilddatengenerator (11), der ausgelegt ist, mindestens ein Stillbilddatum aus Bewegtbilddaten zu erzeugen,
einen Attributinformationsgenerator (12), der ausgelegt ist, Attributinformationen der Stillbilddaten zu erzeugen, und
einen Datendateigenerator (13), der ausgelegt ist, die Stillbilddatendatei (GF) zu erzeugen, die die erzeugten Stillbilddaten und die Attributinformationen enthält, oder ausgelegt ist, die Stillbilddatendatei (GF), die die erzeugten Stillbilddaten enthält, und eine getrennte Datei zu erzeugen, die die Attributinformationen enthält,
wobei die Stillbilddatendatei und die getrennte Datei einander zugeordnet sind,
wobei
der Attributinformationsgenerator (12) ausgelegt ist, Informationen, die zur Bildverarbeitung der Stillbilddaten als Antwort auf die Erzeugung der Stillbilddaten als die Attributinformationen verfügbar sind,
**dadurch gekennzeichnet, dass**
die Attributinformationen Informationen enthalten, die einen Bewegungsbereich spezifizieren, der ein Bereich ist, für den eine Bewegung innerhalb eines Bildbereiches, der durch die Stillbilddaten repräsentiert wird, erfasst wird.

12. Bildverarbeitungsvorrichtung zum Durchführen einer Bildverarbeitung von Stillbilddaten, die in einer Stillbilddatendatei (GF) enthalten sind, die die Stillbilddaten und Attributinformationen der Stillbilddaten enthält und durch die Stillbilddatendateierzeugungsvorrichtung nach Anspruch 11 bereitgestellt wird, wobei
die Bildverarbeitungsvorrichtung ausgelegt ist, den Bewegungsbereich aus dem Bildbereich, der durch die Stillbilddaten repräsentiert wird, entsprechend den Attributinformationen zu extrahieren.

13. Computerprogrammprodukt zum Bewirken, dass ein Computer (PC) eine Stillbilddatendatei (GF) erzeugt, wobei das Computerprogrammprodukt aufweist:
ein computerlesbares Medium, und
ein Computerprogramm, das auf dem computerlesbaren Medium gespeichert ist, wobei das Computerprogramm aufweist:
ein erstes Programm zum Bewirken, dass der Computer (PC) mindestens ein Stillbilddatum aus Bewegtbilddaten erzeugt,
ein zweites Programm zum Bewirken, dass der Computer (PC) Attributinformationen der Stillbildsdaten erzeugt, und
ein drittes Programm zum Bewirken, dass der Computer (PC) die Stillbilddatendatei (GF), die die erzeugten Stillbilddaten und die Attributinformationen enthält, erzeugt, oder zum Bewirken, dass der Computer (PC) die Stillbilddatendatei (GF), die die erzeugten Stillbilddaten enthält, und eine getrennte Datei, die die Attributinformationen enthält, erzeugt, wobei die Stillbilddatendatei und die getrennte Datei einander zugeordnet sind,
wobei
das zweite Programm ein Programm zum Bewirken enthält, dass der Computer (PC) Informationen erzeugt, die zur Bildverarbeitung der Stillbilddaten als Antwort auf die Erzeugung der Stillbilddaten als die Attributinformationen verfügbar sind,
**dadurch gekennzeichnet, dass**
die Attributinformationen Informationen enthalten, die einen Bewegungsbereich spezifizieren, der ein Bereich ist, für den eine Bewegung innerhalb eines Bildbereiches, der durch die Stillbilddaten repräsentiert wird, erfasst wird.

14. Ein Computerprogrammprodukt zum Bewirken, dass ein Computer (PC) eine Bildverarbeitung von Stillbilddaten, die in einer Stillbilddatendatei (GF) enthalten sind, die die Stillbilddaten und Attributinformationen der Stillbilddaten enthält und durch das Computerprogrammprodukt nach Anspruch 13 bereitgestellt wird, durchführt, wobei das Computerprogrammprodukt aufweist:
ein computerlesbares Medium,
ein Computerprogramm, das auf dem computerlesbaren Medium gespeichert ist, wobei
das Computerprogramm ein Programm zum Bewirken aufweist, dass der Computer (PC) den Bewegungsbereich aus dem Bildbereich, der durch die Stillbilddaten repräsentiert wird, entsprechend den Attributinformationen extrahiert.

## Revendications

1. Procédé de génération d'un fichier de données d'image fixe générant un fichier de données d'image fixe (GF), comprenant :
une étape de génération de données d'image fixe générant les données d'au moins une image fixe à partir de données d'image animée ;
une étape de génération d'information d'attribut générant l'information d'attribut des données d'image fixe ; et
une étape de génération de fichier de données générant le fichier de données d'image fixe (GF) contenant les données d'image fixe générées et l'information d'attribut, ou
une étape de génération de fichier de données générant le fichier de données d'image fixe (GF) contenant les données d'image fixe générées et générant un fichier séparé contenant l'information d'attribut, dans lequel le fichier de données d'image fixe et le fichier séparé sont associés l'un à l'autre,
dans lequel
l'étape de génération d'information d'attribut comprend une étape de génération d'information disponible pour un traitement d'image sur les données d'image fixe en réponse à la génération des données d'image fixe, en tant qu'information d'attribut,
**caractérisé en ce que**
l'information d'attribut comprend une information spécifiant une zone de mouvement, qui est une zone pour laquelle un mouvement est détecté dans une zone d'image représentée par les données d'image fixe.

2. Procédé de génération d'un fichier de données d'image fixe selon la revendication 1, dans lequel
les données d'image animée comprennent une pluralité de données d'image fixe source continues en séquence temporelle, dans lequel
l'étape de génération d'information d'attribut comprend une étape de génération de l'information d'attribut utilisant une information autre que l'information incluse dans les données d'image fixe, parmi les informations incluses dans les données d'image animée.

3. Procédé de génération d'un fichier de données d'image fixe selon la revendication 1 ou 2, dans lequel
l'étape de génération de données d'image fixe comprend une étape d'extraction de la zone de mouvement des données d'image fixe.

4. Procédé de génération d'un fichier de données d'image fixe selon l'une quelconque des revendications 1 à 3, dans lequel
l'information d'attribut comprend une information de mouvement (Vb) indicative d'un état de mouvement de translation de la zone de mouvement dans la zone d'image.

5. Procédé de génération d'un fichier de données d'image fixe selon l'une quelconque des revendications 1 à 4, dans lequel
l'information d'attribut comprend une information d'objet indicative d'une propriété d'un objet dans la zone de mouvement.

6. Procédé de traitement d'image exécutant un traitement d'image sur des données d'image fixe comprises dans un fichier de données d'image fixe (GF) qui contient les données d'image fixe et une information d'attribut des données d'image fixe et est produit par le procédé de génération de fichier de données d'image fixe selon l'une quelconque des revendications 1 à 5, dans lequel
le procédé de traitement d'image comprend une étape d'extraction de la zone de mouvement de la zone d'image représentée par les données d'image fixe, en fonction de l'information d'attribut.

7. Procédé de traitement d'image selon la revendication 6, dans lequel
l'information d'attribut comprend une information de mouvement (Vb) indicative d'un état de mouvement de translation, l'état de mouvement de translation comprenant une direction de mouvement de la zone d'image dans la zone de mouvement, et
le procédé de traitement d'image comprend une étape d'extraction d'une image d'une zone en fonction de l'information de mouvement (Vb), la zone extraite comprenant la zone de mouvement dotée d'une zone spécifiée ajoutée sur un côté de direction de mouvement de la zone de mouvement.

8. Procédé de traitement d'image selon la revendication 7, dans lequel
le procédé de traitement d'image comprend une étape d'extraction d'une image d'une zone en fonction de l'information de mouvement (Vb), la zone extraite comprenant la zone de mouvement dotée de zones spécifiées ajoutées sur le côté de direction de mouvement et sur un côté opposé de la zone de mouvement, la zone spécifiée ajoutée sur le côté de direction de mouvement étant plus grande que la zone spécifiée ajoutée sur le côté opposé.

9. Procédé de traitement d'image selon la revendication 7, dans lequel
le procédé de traitement d'image comprend les étapes suivantes :
détermination d'une forme (W1, W2, W3) d'une image représentée par les données d'image fixe devant être générée par le traitement d'image ; et
placement de la zone de mouvement de façon que la zone en surplus à l'extérieur de la zone de mouvement dans une zone d'image présentant la forme déterminée (W1, W2, W3) soit largement distribuée dans la direction de mouvement.

10. Procédé de traitement d'image selon la revendication 9, dans lequel
la forme (W1, W2, W3) est un rectangle présentant un rapport de longueur spécifié ; et
le procédé de traitement d'image comprend une étape de placement de la zone de mouvement de façon que la zone en surplus à l'extérieur de la zone de mouvement dans le rectangle présentant le rapport de longueur spécifié soit plus largement distribuée sur l'un des côtés haut, bas, gauche et droit, celui-ci étant le plus proche de la direction de mouvement.

11. Appareil de génération de fichier de données d'image fixe adapté pour générer un fichier de données d'image fixe, comprenant :
un générateur de données d'image fixe (11) configuré pour générer des données d'au moins une image fixe à partir de données d'image animée ;
un générateur d'information d'attribut (12) configuré pour générer une information d'attribut des données d'image fixe ; et
un générateur de fichier de données (13) configuré pour générer le fichier de données d'image fixe (GF) contenant les données d'image fixe générées et l'information d'attribut, ou configuré pour générer le fichier de données d'image fixe (GF) contenant les données d'image fixe générées et pour générer un fichier séparé contenant l'information d'attribut, dans lequel le fichier de données d'image fixe et le fichier séparé sont associés l'un à l'autre ;
dans lequel
le générateur d'information d'attribut (12) est configuré pour générer une information disponible pour un traitement d'image sur les données d'image fixe en réponse à la génération des données d'image fixe, en tant qu'information d'attribut,
**caractérisé en ce que**
l'information d'attribut comprend une information spécifiant une zone de mouvement, qui est une zone pour laquelle un mouvement est détecté dans une zone d'image représentée par les données d'image fixe.

12. Appareil de traitement d'image destiné à exécuter un traitement d'image sur des données d'image fixe incluses dans un fichier de données d'image fixe (GF) qui contient les données d'image fixe et l'information d'attribut des données d'image fixe et est produit par l'appareil de génération de fichier de données d'image fixe selon la revendication 11, dans lequel
l'appareil de traitement d'image est configuré pour extraire la zone de mouvement de la zone d'image représentée par les données d'image fixe, en fonction de l'information d'attribut.

13. Produit de programme informatique destiné à amener un ordinateur (PC) à générer un fichier de données d'image fixe (GF), le produit de programme informatique comprenant :
un support lisible par ordinateur ; et
un programme informatique stocké sur le support lisible par ordinateur, le programme informatique comprenant :
un premier programme destiné à amener l'ordinateur (PC) à générer des données d'au moins une image fixe à partir de données d'image animée ;
un deuxième programme destiné à amener l'ordinateur (PC) à générer une information d'attribut des données d'image fixe ; et
un troisième programme destiné à amener l'ordinateur (PC) à générer le fichier de données d'image fixe (GF) contenant les données d'image fixe générées et
l'information d'attribut, ou destiné à amener l'ordinateur (PC) à générer le fichier de données d'image fixe (GF) contenant les données d'image fixe générées et à générer un fichier séparé contenant l'information d'attribut, dans lequel le fichier de données d'image fixe et le fichier séparé sont associés l'un à l'autre ;
dans lequel
le deuxième programme comprend un programme destiné à amener l'ordinateur (PC) à générer une information disponible pour le traitement d'image sur les données d'image fixe en réponse à la génération des données d'image fixe, en tant qu'information d'attribut,
**caractérisé en ce que**
l'information d'attribut comprend une information spécifiant une zone de mouvement, qui est une zone pour laquelle un mouvement est détecté dans une zone d'image représentée par les données d'image fixe.

14. Produit de programme informatique destiné à amener un ordinateur (PC) à exécuter un traitement d'image sur des données d'image fixe incluses dans un fichier de données d'image fixe (GF) qui contient les données d'image fixe et l'information d'attribut des données d'image fixe et est produit par le produit de programme informatique selon la revendication 13, le produit de programme informatique comprenant :
un support lisible par ordinateur ; et
un programme informatique stocké sur le support lisible par ordinateur, dans lequel le programme informatique comprend un programme destiné à amener l'ordinateur (PC) à extraire la zone de mouvement de la zone d'image représentée par les données d'image fixe, en fonction de l'information d'attribut.
